# EUROPÄISCHE PATENTSCHRIFT

(11) **EP 3 638 016 B1**
(45) Veröffentlichungstag und Bekanntmachung des Hinweises auf die Patenterteilung: **15.12.2021**
(21) Anmeldenummer: 18734497.3
(22) Anmeldetag: 20.06.2018
(51) Int. Cl.: A01K 1/015, A01K 1/00, A01K 1/01, A01K 15/02, A01K 31/04, A01K 45/00, A01K 29/00

(54) **STALLFAHRZEUG UND VERFAHREN**
FARM ANIMAL VEHICLE AND METHOD
VÉHICULE POUR ELEVAGE AVICOLE ET PROCÉDÉ

(30) Priorität: 20.06.2017 DE 202017103642 U
(43) Veröffentlichungstag der Anmeldung: 22.04.2020
(73) Patentinhaber: Big Dutchman International GmbH, 49377 Vechta (DE)
(72) Erfinder: RUHOLL, Felix, 49393 Lohne (DE)
(74) Vertreter: Eisenführ Speiser
(86) Internationale Anmeldenummer: PCT/EP2018/066411
(87) Internationale Veröffentlichungsnummer: WO 2018/234379

(56) Entgegenhaltungen:
- EP-A1- 2 169 501
- WO-A1-2016/167649
- FR-A1- 3 044 868
- GB-A- 2 529 166
- US-A1- 2005 217 589

## Beschreibung

Die Erfindung betrifft ein Stallfahrzeug zum Bewegen auf einer Einstreu aufweisenden Bodenfläche und ein Verfahren zum Bewegen eines Stallfahrzeugs auf einer Einstreu aufweisenden Bodenfläche sowie eine Verwendung eines Stallfahrzeugs in einem Geflügelstall für Geflügeltiere zur Beeinflussung von Aufenthaltspositionen von Geflügeltieren.

Geflügel kann ganz allgemein in der Käfighaltung, Kleingruppenhaltung, Bodenhaltung und/oder Freilandhaltung gehalten werden. Die Käfighaltung ist jedoch in vielen Ländern untersagt. Die derzeit in der Europäischen Union am meisten verbreiteteste Haltung von Geflügel ist die Haltung in Volieren, wobei sich die Tiere in bzw. auf den Volieren und auf einer Bodenfläche, auf der die Volieren angeordnet sind, bewegen können. Die Bodenfläche weist in der Regel eine Einstreu auf. Insbesondere die Volieren sind derart entwickelt, dass ein Wohlbefinden der Tiere unter Berücksichtigung der notwendigen Produktivität verbessert wird.

Es ist wünschenswert, dass die Tiere in ihren Ruhephasen in die Volieren einkehren und nicht auf der Bodenfläche bzw. der Einstreu des Stalls verweilen. Das Verweilen von Geflügeltieren auf der Bodenfläche, insbesondere zu Nachtzeiten, kann einerseits zu einem verminderten Wohlbefinden des Tieres führen und andererseits die Gesundheit des Geflügeltieres und somit auch der gesamten Geflügeltierherde gefährden.

Der Aufenthalt auf der Bodenfläche kann darüber hinaus zu Bodeneiern führen. Bodeneier sind Eier, die nicht im dafür vorgesehenen Legenest gelegt wurden, sondern auf der Bodenfläche bzw. der Einstreu eines Stalls. Von dieser Stelle können die Bodeneier in der Regel nicht automatisch abgeführt werden, sodass diese manuell von einem Bediener eingesammelt werden müssen.

Das Einsammeln von Bodeneiern durch einen Farmer ist zeitintensiv und verursacht Personalkosten. Bei Bodeneiern ist darüber hinaus deren zeitliche Zuordnung schwierig. Durch das Legen von Bodeneiern kann es passieren, dass ein von einem Farmer eingesammeltes Ei nicht frisch gelegt wurde, sondern dass dieses dort bereits seit längerer Zeit liegt. Das Einbringen eines derart länger liegenden Eis in die weitere Verwertung ist in der Regel nicht wünschenswert.

FR 3 044 868 A1 beschreibt einen mobilen Trainingsroboter für eine Geflügelfarm mit mindestens einem Legebereich, wobei der Roboter Mittel zum Bewegen des Roboters über den Boden aufweist.

US 2005/217589 A1 offenbart ein anpassungsfähiges und konfigurierbares automatisches, bahnloses und selbstfahrendes Robotersystem zum Aufrühren des Geflügels in der korrosiven Umgebung eines Geflügelstalls.

EP 2169501 A1 beschreibt ein Verfahren zum Navigieren eines unbemannten Fahrzeugs, das die folgenden Schritte umfasst: Erfassen eines Tieres, Bestimmen, ob ein aktueller Kurs des unbemannten Fahrzeugs zu einer Kollision mit dem Tier führt.

WO 2016/167649 A1 offenbart ein System zur Durchführung einer bodenbezogenen Aktion. Das System umfasst ein Tiergehege zum Festhalten mindestens eines Tieres, das mit einer Gehege-Bodenfläche versehen ist, ein erstes autonomes Fahrzeug, das so konfiguriert ist, dass es über die Bodenfläche fährt, um die bodenbezogene Aktion auszuführen, und eine Futterzuführvorrichtung, um dem Tier Futter zu liefern.

GB 2 529 166 A beschreibt eine Vorrichtung zum Sammeln von Tierexkrementen, mit einem Roboter-Tierkot-Sammler mit einem Körper, einem Antriebssystem für den Antrieb des Körpers entlang einer Bodenfläche, ein Navigationssystem zur Selbststeuerung des Körpers in einer Umgebung in der tierische Exkremente zu sammeln sind, ein Detektionssystem zur Identifizierung der Tierexkremente, eine Ladevorrichtung zum Aufnehmen von Tierexkrementen, eine Entladevorrichtung für den Abwurf aufgenommener Tierexkremente, und ein Kontrollsystem für Kontrolle des Betriebs des Tierexkrementsammelroboters.

Es ist daher eine Aufgabe der vorliegenden Erfindung, einen oder mehrere der genannten Nachteile zu vermindern oder zu beseitigen. Insbesondere ist es eine Aufgabe der Erfindung, eine Lösung bereitzustellen, die die Bodeneierquote einer Geflügeltierherde reduziert. Ferner ist es eine Aufgabe der Erfindung, eine Lösung bereitzustellen, die das Wohlbefinden der Tiere und/oder die Gesundheit der Tiere in der Geflügeltierhaltung erhöht.

Diese Aufgabe wird erfindungsgemäß gelöst durch ein Stallfahrzeug nach Anspruch 1.

Der Erfindung liegt die Erkenntnis zugrunde, dass eine gezielte Beeinflussung von Aufenthaltspositionen, insbesondere von Ruhepositionen, von Geflügeltieren in einer Reduktion einer Bodeneierquote resultiert und/oder zum Treiben von Geflügeltieren führt. Das Bewegen eines Stallfahrzeugs auf einer Einstreu aufweisenden Bodenfläche ist mit Herausforderungen verbunden. Fahrzeuge mit drei, vier oder mehreren Rädern fahren sich in der Regel in der Einstreu des Geflügelstalls fest, da die Räder zu weit einsinken und somit das Fahrzeug mit seiner Karosserie auf der Einstreu aufliegt. Darüber hinaus setzt sich die Einstreu regelmäßig in das Profil von den Bewegungseinheiten, beispielsweise Rädern, fest. Dies ist insbesondere der Fall, wenn es sich um eine feuchte Einstreu handelt. Die Einstreu ist insbesondere ein Material, um in Stallungen den Boden abzudecken und die Ausscheidungen der Tiere aufzunehmen. Die Einstreu dient beispielsweise zur Isolierung gegen vom Boden aufsteigende Kälte, zur Schaffung eines günstigen Mikroklimas und zur Aufnahme von Wasser, das über den Kot der Tiere ausgeschieden wird bzw. von den Tränken stammt. Als Material kommen insbesondere organische und mineralische Materialien infrage. Als Einstreu kommen in der Regel granulare, rieselfähige Materialien zum Einsatz, die ein hohes Wasserbindevermögen bzw. eine hohe Saugfähigkeit haben und viel Feuchtigkeit aufnehmen können, allerdings auch im feuchten Zustand eine krümelige Struktur behalten und locker und rieselfähig bleiben, insbesondere hart, beweglich nicht festpappend. Einstreumaterial sollte ferner sauber, trocken und biologisch abbaubar sein sowie einen niedrigen Staubanteil aufweisen und nicht mit Staub, Pilzen oder Sporen belastet sein. Beispiele für Einstreumaterialien sind Strohgranulat aus gemahlenem und gepresstem Stroh oder Strohhäcksel bzw. Kurzstroh, wobei als Strohsorten insbesondere Weizen-, Gersten- oder Roggenstroh zum Einsatz kommt, Dinkelspelzen, Holzspäne, insbesondere nicht imprägnierte, staub- und pilzfreie Weichholzhobelspäne, Holzhackschnitzel, Zellstoff, getrocknete Maissilage, Maisspindelgranulat, oder ähnliche Materialien. In Deutschland werden bevorzugt Kurzstroh bzw. Strohhäcksel und/oder Holzspäne eingesetzt. Die Bodenfläche, gegebenenfalls mit der Einstreu, eines Geflügelstalls ist insbesondere als Nutztierfläche ausgebildet.

Bei dem Bewegen des Stallfahrzeugs auf der Einstreu, insbesondere einer feuchten Einstreu, soll insbesondere ein dauerhafter Betrieb bzw. ein dauerhafte Bewegen des Stallfahrzeugs innerhalb des Geflügelstalls ermöglicht werden. Das Stallfahrzeug soll ohne menschliche Eingriffe, insbesondere autonom, innerhalb des Geflügelstalls bewegbar sein, sodass das Stallfahrzeug eine sichere Beeinflussung der Aufenthaltsposition, insbesondere Ruheposition, von Geflügeltieren, insbesondere zur Reduktion einer Bodeneierquote und/oder zum Treiben von Geflügeltieren, gewährleistet. Das Stallfahrzeug ist insbesondere ausgebildet, sich sowohl auf der Einstreu als auch auf einem Stallboden ohne Einstreu bewegen zu können.

Das Stallfahrzeug, insbesondere seine konstruktive Ausgestaltung und dessen Funktionen, ist insbesondere entsprechend jeweils geltender Bestimmungen, insbesondere im Rahmen des Tierschutzgesetzes, ausgebildet.

Das Stallfahrzeug wird durch den im Wesentlichen emissionsfreien Antrieb angetrieben. Ein emissionsfreier Antrieb zeichnet sich insbesondere dadurch aus, dass dieser im Wesentlichen keine flüchtigen Verbrennungsprodukte emittiert und insbesondere auch im Wesentlichen keine die Tiergesundheit gefährdende Emission emittiert. Der im Wesentlichen emissionsfreie Antrieb ist mit der Bewegungseinheit gekoppelt, wobei die Bewegungseinheit ein Bewegen des Stallfahrzeugs auf der Einstreu, insbesondere einer feuchten Einstreu, ermöglicht. Ferner ist es bevorzugt, dass die Bewegungseinheit ein Bewegen des Stallfahrzeugs auf Spaltenböden ermöglicht.

Die Positionsbestimmungsvorrichtung des Stallfahrzeugs ist angeordnet und ausgebildet, die Position des Stallfahrzeugs relativ zu Stalleinbauten des Geflügelstalls zu ermöglichen. Darüber hinaus ist es bevorzugt, dass die Positionsbestimmungsvorrichtung angeordnet und ausgebildet ist, die Position des Stallfahrzeugs relativ zu Stallbegrenzungen, insbesondere äußeren Stallbegrenzungen, wie beispielsweise Stallwänden, zu ermitteln. Mittels einer derartigen Positionsbestimmungsvorrichtung kann sich das Stallfahrzeug im Wesentlichen ungehindert von festen, nicht beweglichen Gegenständen im Stall bewegen.

Darüber hinaus kann es bevorzugt sein, dass die Steuerungsvorrichtung angeordnet und ausgebildet ist, eine mittels der Positionsbestimmungsvorrichtung bestimmte Position des Stallfahrzeugs mit einer Sollposition des bereitgestellten Fahrprofils zu vergleichen, und/oder die Steuerungsvorrichtung angeordnet und ausgebildet ist, den Antrieb und/oder die Bewegungseinheit derart zu steuern, dass die mittels der Positionsbestimmungsvorrichtung bestimmte Position im Wesentlichen einer Sollposition des bereitgestellten Fahrprofils entspricht.

Die Steuerungsvorrichtung ist insbesondere derart angeordnet und ausgebildet, dass diese den Antrieb steuert und ein vorbestimmtes Fahrprofil bereitstellt, wobei das Fahrprofil mindestens ein Bewegungsmuster und mindestens einen anzufahrenden Vorzugsbereich innerhalb des Geflügelstalls umfasst. Ein Fahrprofil umfasst somit ein Bewegungsmuster und einen Vorzugsbereich. Das Bewegungsmuster kann synonym als eine Bewegungsroute oder ein Abfahrweg bezeichnet werden. Der Vorzugsbereich befindet sich auf diesem Bewegungsmuster bzw. ist ein bestimmter Bereich, der zumindest abschnittsweise im Rahmen der Route des Bewegungsmusters angefahren wird.

In diesem Vorzugsbereich bewegt sich das Stallfahrzeug nach vordefinierten Kriterien. Beispielsweise kann das Stallfahrzeug im Vorzugsbereich eine kreisende und/oder zickzackförmige und/oder hin- und her führende Bewegung ausführen. Darüber hinaus kann das Stallfahrzeug auch noch weitere Funktionalitäten in dem Vorzugsbereich ausführen. Ferner ist vorgesehen, dass das Fahrprofil zwei oder mehr Vorzugsbereiche umfasst. Die Vorzugsbereiche umfassen bevorzugte Plätze der Geflügeltiere. Diese bevorzugten Plätze werden von den Geflügeltieren insbesondere zum Ablegen von Bodeneiern und/oder zum Verweilen in Nachtphasen bevorzugt genutzt. Durch das Anfahren der Vorzugsbereiche durch das Stallfahrzeug werden die Tiere in diesen Bereichen besonders stark animiert, um somit keine Bodeneier zu produzieren bzw. hier zu nächtigen. Bei der spezifischen Ausgestaltung der Animation der Tiere sind insbesondere die nationalen und internationalen Tierschutzgesetze zu beachten. Darüber hinaus ist es bevorzugt, dass das Fahrprofil zwei oder mehr Bewegungsmuster umfasst, wobei die Bewegungsmuster beispielsweise tageszeitabhängig sein können. Unter Tageszeitabhängigkeit ist im vorliegenden Zusammenhang insbesondere die künstliche, im Stall herrschende Tageszeit gemeint, da in einem geschlossenen Geflügelstall in der Regel andere Tageszeiten simuliert werden als diese außerhalb des Geflügelstalls tatsächlich herrschen. Die Tageszeit wird in einem Geflügelstall in der Regel mittels der Lichtverhältnisse simuliert.

In einer bevorzugten Ausführungsvariante des Stallfahrzeugs ist vorgesehen, dass eine Stallfahrzeughöhe kleiner ist als eine lichte Höhe des mindestens einen anzufahrenden Vorzugsbereichs, insbesondere kleiner ist als eine lichte Höhe eines anzufahrenden Vorzugsbereichs unterhalb von Stalleinbauten. Die lichte Höhe des mindestens einen anzufahrenden Vorzugsbereichs ist vorzugsweise ein im vorbestimmten Fahrprofil hinterlegter Parameter. Dies bedeutet insbesondere, dass die Vorzugsbereiche lediglich derartige lichte Höhen aufweisen, dass hier stets ein Verfahren des Stallfahrzeugs ermöglicht wird. Flächen deren lichte Höhe geringer ist als die Stallfahrzeughöhe sind somit nicht Teil des Vorzugsbereichs.

Ein derartiger Bereich zu geringer lichter Höhe kann auch von einem Vorzugsbereich umgeben sein. Beispielsweise können Stalleinbauten unter ihrer untersten Etage Stellmotoren aufweisen, die dem Stallboden zugewandt sind. Diese Stellmotoren können eine lichte Höhe über dem Stallboden bzw. der Einstreu aufweisen, die geringer ist als eine Stallfahrzeughöhe, wobei der Bereich unter dem Stellmotor dann nicht vom Vorzugsbereich umfasst ist.

Insbesondere ist die lichte Höhe von Geflügelaufenthaltsvorrichtungen, die aufgeständert sind, zu berücksichtigen. Darüber hinaus ist die lichte Höhe generell unter Stalleinbauten des Geflügelstalls bei der Parametrisierung der Fahrprofile zu berücksichtigen. Insbesondere ist es vorgesehen, dass die Stallfahrzeughöhe kleiner 450 mm, und/oder kleiner 400 mm, und/oder kleiner 350 mm, und/oder kleiner 300 mm, und/oder kleiner 250 mm, und/oder kleiner 200 mm ist. Mittels eines derart ausgebildeten Stallfahrzeugs wird das Befahren eines Großteils eines Geflügelstalls ermöglicht. Somit kann zielgerichtet und an im Wesentlichen allen Orten des Geflügelstalls eine Beeinflussung von Aufenthaltspositionen, insbesondere Ruhepositionen, von Geflügeltieren ermöglicht werden, und somit flächendeckend eine Reduktion einer Bodeneierquote und/oder ein Treiben von Geflügeltieren ermöglicht werden.

Gemäß einer weiteren bevorzugten Ausführungsvariante des Stallfahrzeugs ist vorgesehen, dass das vorbestimmte Fahrprofil eine abzufahrende Fahrprofildistanz und/oder eine Fahrprofilzeitdauer aufweist und die Steuerungsvorrichtung angeordnet und ausgebildet ist, ein Bewegen des Stallfahrzeugs derart zu steuern, dass sich das Stallfahrzeug mehr als 20 %, und/oder 30%, und/oder 40 %, und/oder 50 %, und/oder 60 %, und/oder 70 %, und/oder 80 % der Fahrprofildistanz innerhalb der anzufahrenden Vorzugsbereiche bewegt, und/oder sich das Stallfahrzeug mehr als 20 %, und/oder 30%, und/oder 40 %, und/oder 50 %, und/oder 60 %, und/oder 70 %, und/oder 80 % der Fahrprofilzeitdauer innerhalb der anzufahrenden Vorzugsbereiche bewegt.

Eine weitere bevorzugte Fortbildung des Stallfahrzeugs zeichnet sich dadurch aus, dass dieses eine Animiervorrichtung mit mindestens einer Animation umfasst, wobei die Steuerungsvorrichtung vorzugsweise angeordnet und ausgebildet ist, die Animation bei Positionierung des Stallfahrzeugs innerhalb eines Vorzugsbereichs und/oder im Bereich eines vordefinierten Animationsbereichs zu aktivieren und/oder die Animation in Abhängigkeit der Zeit zu aktivieren und/oder zu deaktivieren und/oder zu verändern.

Die Animiervorrichtung ist insbesondere angeordnet und ausgebildet, ein Geflügeltier zu erkennen und die Animation, insbesondere ein optisches Signal, gezielt auf das Geflügeltier zu richten. Die Animiervorrichtung ist insbesondere angeordnet und ausgebildet, die Tiere auf der Bodenfläche zu Aktivität zu animieren, sodass diese nicht dauerhaft auf der Bodenfläche verweilen. Dies ist insbesondere zur Förderung des Wohlbefindens und des Gesundheitszustandes der Tiere wünschenswert und reduziert darüber hinaus noch die Bodeneierquote, sodass hier auch ein wirtschaftlicher Vorteil erreicht werden kann.

Insbesondere ist es bevorzugt, dass die Animiervorrichtung angeordnet und ausgebildet ist, mindestens ein optisches Signal, und/oder mindestens ein akustisches Signal, und/oder ein Fluid, insbesondere Wasser, als Animation zu emittieren. Darüber hinaus besteht die Möglichkeit, dass die Animiervorrichtung als Animation ein Fluid, insbesondere Wasser, emittiert. Eine Animation der Geflügeltiere wird bereits durch das Bewegen des Stallfahrzeugs ermöglicht. Insbesondere das gezielte Bewegen des Stallfahrzeugs innerhalb eines Vorzugsbereiches ermöglicht die zielgerichtete Animation eines Geflügeltieres. Ferner kann ein Geflügeltier auch durch eine Berührung mit dem Stallfahrzeug animiert werden.

Außerdem kann die Animiervorrichtung angeordnet und ausgebildet sein, Beschäftigungselemente für Geflügeltiere bereitzustellen. Als Beschäftigungselemente können beispielsweise Bälle, Luzerneballen oder Picksteine eingesetzt werden.

Ferner ist vorgesehen, dass die Steuerungsvorrichtung zur Bereitstellung eines ersten Fahrprofils und eines zweiten Fahrprofils ausgebildet ist, wobei sich ein erstes Bewegungsmuster des ersten Fahrprofils von einem zweiten Bewegungsmuster des zweiten Fahrprofils unterscheidet, und die Steuerungsvorrichtung angeordnet und ausgebildet ist, das erste Fahrprofil und das zweite Fahrprofil zeitabhängig bereitzustellen. Alternativ oder zusätzlich unterscheiden sich das erste Fahrprofil von dem zweiten Fahrprofil durch die Anzahl und/oder Verortung der Vorzugsbereiche. Darüber hinaus ist es bevorzugt, dass in der Steuerungsvorrichtung ein Bezugsmodell eines Geflügelstalls hinterlegt ist und das Fahrprofil bzw. die Fahrprofile auf Grundlage des Bezugsmodells ermittelt ist bzw. sind, wobei vorzugsweise das Bezugsmodell des Geflügelstalls Stallbegrenzungen, und/oder Einbauten, und/oder Durchgänge zwischen zwei oder mehreren Stallabschnitten, insbesondere Aufenthaltsbereichen, umfasst.

Ferner wird beschrieben ein Stallfahrzeug zum Bewegen auf einer Einstreu aufweisenden Bodenfläche eines Geflügelstalls zur Beeinflussung von Aufenthaltspositionen von Geflügeltieren umfassend einen im Wesentlichen emissionsfreien Antrieb, mindestens eine mit dem Antrieb gekoppelte Bewegungseinheit, wobei die Bewegungseinheit angeordnet und ausgebildet ist, ein Bewegen des Stallfahrzeugs auf der Einstreu zu ermöglichen, eine Positionsbestimmungsvorrichtung zur Bestimmung einer Position des Stallfahrzeugs relativ zu Stalleinbauten, eine Steuerungsvorrichtung zur Steuerung des Antriebs, ein Gehäuse, das vorzugsweise eine einstreuabgewandte Oberseite des Stallfahrzeugs und/oder vorzugsweise mindestens abschnittsweise Seitenflächen des Stallfahrzeugs umschließt, wobei das Gehäuse schwimmend gelagert ist, insbesondere gegenüber einem Grundkörper und/oder einem Chassis des Stallfahrzeugs, und/oder mindestens eine Kollisionsdetektionsvorrichtung vorgesehen ist, die angeordnet und ausgebildet ist, einen Kontakt mit einem Hindernis, insbesondere einem Gegenstand und/oder einem Tier, zu erkennen, wobei die mindestens eine Kollisionsdetektionsvorrichtung vorzugsweise mindestens einen Anschlagsensor umfasst.

Eine Kollisionsdetektionsvorrichtung hat den Vorteil, dass Kollisionen des Stallfahrzeugs mit Geflügeltieren und/oder Gegenständen erkannt werden können, was es ermöglicht, basierend auf einer Kollision eine angemessene Steuerung vorzusehen, beispielsweise das Stallfahrzeug zu stoppen. Vorzugsweise ist die Kollisionsdetektionsvorrichtung ausgebildet, einen Kontakt mit einem Hindernis, insbesondere einem Gegenstand und/oder einem Tier, zu erkennen, unabhängig von der Fortbewegungsrichtung des Stallfahrzeugs, beispielsweise auch bei einer Rückwärts- und/oder Seitwärtsfahrt des Stallfahrzeugs.

Vorzugsweise erfolgt bei der Kollisionsdetektion eine Rückspeisung von Energie (Rekuperation), insbesondere der für eine Bremsung des Stallfahrzeugs aufgewendeten Energie.

Bevorzugte Ausführungsformen eines oder mehrere hierin genannter Aspekte werden im Folgenden beschrieben.

In einer bevorzugten Ausführungsform umfasst die mindestens eine Kollisionsdetektionsvorrichtung mindestens ein Anschlagelement, das vorzugsweise angeordnet und/oder ausgebildet ist, mit dem Anschlagsensor zusammenzuwirken.

In einer bevorzugten Ausführungsform umfasst die mindestens eine Kollisionsdetektionsvorrichtung mindestens ein Referenzobjekt, das vorzugsweise angeordnet und/oder ausgebildet ist, mit dem Anschlagsensor zusammenzuwirken.

Ferner bevorzugt ist es, dass der Anschlagsensor an dem Gehäuse und das Anschlagelement und/oder das Referenzobjekt an dem Grundkörper und/oder dem Chassis angeordnet ist.

Eine weitere bevorzugte Ausführungsform sieht vor, dass der Anschlagsensor an dem Grundkörper und/oder dem Chassis und das Anschlagelement und/oder das Referenzobjekt an dem Gehäuse angeordnet ist.

Eine Kollisionsdetektion kann vorzugsweise durch eine berührungslose oder auf Berührung basierende Detektion einer Relativverschiebung zwischen Anschlagsensor und Anschlagelement und/oder einer Relativverschiebung zwischen Anschlagsensor und Referenzobjekt erfolgen. Eine Kollisionsdetektion kann vorzugsweise durch eine optikfreie Detektion einer Relatiwerschiebung zwischen Anschlagsensor und Anschlagelement und/oder einer Relatiwerschiebung zwischen Anschlagsensor und Referenzobjekt erfolgen. Eine auf Berührung basierende und/oder eine optikfreie Detektion hat den Vorteil, besonders gut für eine staubbelastete Umgebung im Stall geeignet zu sein.

Eine Kollisionsdetektion kann auch durch eine Kontaktierung von Anschlagsensor und Anschlagelement und/oder Kontaktierung von Anschlagsensor und Referenzobjekt erfolgen.

Vorzugsweise erfolgt die Kollisionsdetektion mechanisch und/oder elektromagnetisch und/oder optisch und/oder mittels Ultraschall und/oder mittels Radar und/oder mittels Laser, insbesondere optischem Laser, und/oder mittels Thermografie und/oder magnetisch und/oder kapazitiv und/oder induktiv und/oder elektromechanisch und/oder elektrisch und/oder mittels Wirbelstrom.

Der Anschlagsensor ist vorzugsweise von einer Lagerung des Gehäuses umfasst und/oder an einer Lagerung des Gehäuses angeordnet. Der Anschlagsensor kann auch beispielsweise an einer inneren Oberfläche des Gehäuses, die vorzugsweise dem Grundkörper und/oder Chassis des Stallfahrzeugs zugewandt ist, angeordnet sein.

Vorzugsweise sind mindestens zwei Kollisionsdetektionsvorrichtungen vorgesehen, die angeordnet und/oder ausgebildet sind, unterschiedliche Kollisionsrichtungen zu detektieren. Insbesondere kann es bevorzugt sein, die mindestens zwei Kollisionsdetektionsvorrichtungen in einem Winkel, insbesondere in einem 90°-Winkel, zueinander anzuordnen. Durch das Vorsehen von mindestens zwei Kollisionsdetektionsvorrichtungen kann in besonders bevorzugter Weise eine Anschlagrichtung erkannt werden. Eine Anschlagrichtung ist vorzugsweise eine Richtung, in der sich ein die Kollision bzw. den Anschlag verursachendes Objekt befindet, beispielsweise bezogen auf einen Mittel- und/oder Referenzpunkt des Stallfahrzeugs und/oder bezogen auf eine, insbesondere momentane, Fortbewegungsrichtung des Stallfahrzeugs.

Die Kollisionsdetektionsvorrichtung kann beispielsweise als Tasterkennnung ausgebildet sein. Hierzu kann vorzugsweise als Anschlagsensor ein Taster an dem Chassis des Stallfahrzeugs angeordnet sein und ein Anschlagelement z.B. in Form eines Anschlagblechs, Anschlagwinkels, einer Erhebung oder einer Ausnehmung, am Gehäuse angeordnet sein, vorzugsweise an dessen innerer Oberfläche, die auch als Gehäuseunterseite bezeichnet werden. Alternativ kann das Anschlagelement am Chassis des Stallfahrzeugs angeordnet sein und der Anschlagsensor an dem Gehäuse, vorzugsweise an der Gehäuseunterseite. Im Normalzustand (ohne Kollision) sind das Anschlagelement und der Anschlagsensor vorzugsweise voneinander beabstandet. Bei einer Kollision findet eine Relativbewegung zwischen Anschlagelement und Anschlagsensor statt. Wenn die Relativbewegung groß genug ist, um den Abstand zu überbrücken und das Anschlagelement den Anschlagsensor kontaktiert, wird vorzugsweise ein Schalter aktiviert und/oder eine Kollision detektiert.

Die Kollisionsdetektionsvorrichtung kann beispielsweise als analoge Anschlagerkennung ausgebildet sein. Hierzu kann vorzugsweise ein analoger Sensor und/oder ein Sensor mit stetiger Messung in Verbindung mit einem Schwellwert vorgesehen sein.

Die Kollisionsdetektionsvorrichtung kann vorzugsweise einen Näherungssensor und/oder ein Potentiometer, vorzugsweise mit Schaltschwelle, umfassen.

Ferner vorzugsweise kann die Kollisionsdetektionsvorrichtung einen Lagesensor und/oder einen Positionssensor umfassen, wobei der Lagesensor und/oder einen Positionssensor vorzugsweise ausgebildet ist, seine Lage relativ zu einem anderen Objekt zu bestimmen.

Die Kollisionsdetektionsvorrichtung kann ein Referenzobjekt aufweisen, dem vorzugsweise eine ähnliche Funktion zukommen kann wie dem Anschlagelement.

Die Kollisionsdetektionsvorrichtung kann beispielsweise als induktive und/oder kapazitive Kollisionserkennung ausgebildet sein. Hierzu kann vorzugsweise eine stetige Messung vorgesehen sein, vorzugsweise mit der Möglichkeit, mehrere Schwellwerte im Anschlagsensor und/oder in einer Sensorsteuerung zu hinterlegen. Ein induktiver und/oder kapazitiver Anschlagsensor kann vorzugsweise am Chassis angeordnet sein, wobei vorzugsweise das Referenzobjekt am Gehäuse angeordnet ist. Der induktive und/oder kapazitive Anschlagsensor kann auch am Gehäuse und das Referenzobjekt am Chassis angeordnet sein. Das Referenzobjekt ist vorzugsweise elektrisch leitend, insbesondere niederohmig, ausgebildet. Das Referenzobjekt kann beispielsweise in Form einer Erhebung oder einer Ausnehmung ausgebildet sein.

Die Kollisionsdetektionsvorrichtung kann beispielsweise als magnetische Kollisionserkennung ausgebildet sein. Hierzu kann vorzugsweise eine stetige Messung vorgesehen sein, vorzugsweise mit der Möglichkeit, mehrere Schwellwerte im Anschlagsensor und/oder in einer Sensorsteuerung zu hinterlegen. Ein magnetischer Anschlagsensor kann vorzugsweise am Chassis angeordnet sein, wobei vorzugsweise das Referenzobjekt am Gehäuse angeordnet ist. Der magnetische Anschlagsensor kann auch am Gehäuse und das Referenzobjekt am Chassis angeordnet sein. Das Referenzobjekt ist vorzugsweise aus einem magnetischen Material ausgebildet. Vorzugsweise umfasst das Referenzobjekt ein magnetisches Muster, beispielsweise eine alternierende Folge von Nord- und Südpolen. Eine Messung der relativen Bewegung von Anschlagsensor und Referenzobjekt zueinander kann beispielsweise über eine Zählung der Polwechsel erfolgen. Ein magnetischer Sensor kann bspw. nach dem Prinzip eines Hall Sensors, nach dem Reed-Kontakt Prinzip oder nach dem magnetoresisitven Prinzip arbeiten.

Die Kollisionsdetektionsvorrichtung kann beispielsweise als optische Kollisionserkennung ausgebildet sein. Hierzu kann vorzugsweise eine stetige Messung vorgesehen sein, vorzugsweise mit der Möglichkeit, mehrere Schwellwerte im Anschlagsensor und/oder in einer Sensorsteuerung zu hinterlegen. Ein optischer Anschlagsensor kann vorzugsweise am Chassis angeordnet sein, wobei vorzugsweise das Referenzobjekt am Gehäuse angeordnet ist. Der optische Anschlagsensor kann auch am Gehäuse und das Referenzobjekt am Chassis angeordnet sein. Das Referenzobjekt ist vorzugsweise abhängig vom Messverfahren und/oder abhängig vom Anschlagsensor ausgebildet und kann beispielsweise spiegelnd oder nicht spiegelnd ausgebildet sein. Vorzugsweise umfasst das Referenzobjekt ein optisches Muster, beispielsweise eine alternierende Folge von Erkennungsmarken. Eine Messung der relativen Bewegung von Anschlagsensor und Referenzobjekt zueinander kann beispielsweise über eine Zählung der Wechsel von Erkennungsmarken erfolgen. Das optische Muster kann wiederholend, strukturiert, unstrukturiert, unidirektional bidirektional, oder auch beliebig ausgebildet sein. Vorzugsweise lässt das Muster eine Zählung von Musterwechseln bei einer relativen Bewegung von Anschlagsensor und Referenzobjekt zueinander zu. Eine Mustererkennung materialinhärenter Muster ist ebenfalls möglich, die beispielsweise mit einem Specklemessverfahren erfolgen kann. Eine optische Kollisionserkennung und ihre bevorzugten Ausgestaltungen hat insbesondere auch den Vorteil, dass bereits mit einer Kollisionsdetektionsvorrichtung auch eine Anschlagrichtung bestimmt werden kann.

Die Kollisionsdetektionsvorrichtung kann beispielsweise als elektromechanische Kollisionserkennung ausgebildet sein und vorzugsweise ein Potentiometer umfassen, insbesondere ein Linearpotentiometer und/oder ein Drehpotentiometer, vorzugsweise mit Übertragung beispielsweise in Form eines Steuerknüppels (Joysticks). Beispielsweise kann der Anschlagsensor den festen Teil des Potentiometers umfassen und der bewegliche Teil des Potentiometers als Referenzobjekt dienen. Hierzu kann vorzugsweise eine stetige Messung vorgesehen sein, vorzugsweise mit der Möglichkeit, mehrere Schwellwerte im Anschlagsensor und/oder in einer Sensorsteuerung zu hinterlegen. Ein elektromechanischer Anschlagsensor kann vorzugsweise am Chassis angeordnet sein, wobei vorzugsweise das Referenzobjekt durch den beweglichen Teil des Potentiometers gebildet wird und vorzugsweise mit dem Gehäuse verbunden ist. Der elektromechanische Anschlagsensor kann auch am Gehäuse angeordnet sein und das Referenzobjekt durch den beweglichen Teil des Potentiometers gebildet und vorzugsweise mit dem Chassis verbunden sein. So kann beispielsweise bei einer relativen Bewegung des Gehäuses zum Chassis der verstellbare Teil des Potientiometers bewegt werden, womit eine Änderung des elektrischen Widerstandes des Potentiometers einhergeht und ein Rückschluss auf die Lage- und/oder Positionsänderung möglich wird. Wie auch für die meisten anderen Ausgestaltungen der Kollisionsdetektionsvorrichtung ermöglich das Vorsehen von zwei Kollisionsdetektionsvorrichtungen mit Potentiometern die Lageermittlung für mehrere Dimensionen. Beispielsweise kann eine Potentiometerkombination in Form eines Steuerknüppels, wie er etwa aus der Steuerung von ferngelenkten Fahrzeugen bekannt ist, eingesetzt werden.

In einer weiteren besonders bevorzugten Ausführungsvariante des Stallfahrzeugs umfasst dieses ein Gehäuse, das eine einstreuabgewandte Oberseite des Stallfahrzeugs und/oder mindestens abschnittsweise Seitenflächen des Stallfahrzeugs umschließt. Vorzugsweise ist das Gehäuse schwimmend gelagert.

Vorzugsweise weist das Gehäuse einen Kontaktabschnitt auf, der vorzugsweise umlaufend um den Außenumfang des Gehäuses ausgebildet ist. Der Kontaktabschnitt kann beispielsweise ringförmig ausgebildet sein. Insbesondere ist es bevorzugt, dass der Kontaktabschnitt in einer im Wesentlichen horizontalen Richtung den äußeren Rand des Stallfahrzeugs ausbildet, so dass ein Kontakt mit einem Hindernis vorzugsweise nur über den Kontaktabschnitt erfolgt. Das Gehäuse und/oder der Kontaktabschnitt kann bzw. können beispielsweise aus Kunststoff, insbesondere aus Polyurethan (PUR) ausgebildet sein oder Kunststoff, insbesondere Polyurethan (PUR), umfassen. Das Gehäuse und/oder der Kontaktabschnitt kann vorzugsweise weich und/oder elastische ausgebildet sein, um ein einem Kontakt mit einem Hindernis keine Schäden zu verursachen. Ferner vorzugsweise umfasst das Gehäuse mindestens einen Anschlagsensor, der angeordnet und ausgebildet ist, einen Kontakt des Gehäuses mit einem Hindernis, insbesondere einem Gegenstand und/oder einem Tier, zu erkennen. Der mindestens eine Anschlagsensor kann vorzugsweise an einer Lagerung des Gehäuses angeordnet sein. Die Lagerung kann aus Kunststoff, insbesondere aus Polyurethan (PUR) ausgebildet sein oder Kunststoff, insbesondere Polyurethan (PUR), umfassen.

Ferner ist es bevorzugt, dass der mindestens eine Anschlagsensor angeordnet und ausgebildet ist, eine Anschlagrichtung zu erkennen, und/oder der mindestens eine Anschlagsensor eine veränderliche Sensitivität aufweist, welche vorzugsweise in Abhängigkeit einer durch die Positionsbestimmungsvorrichtung bestimmten Position des Stallfahrzeugs veränderlich ist, und/oder der mindestens eine Anschlagsensor angeordnet und ausgebildet ist, in vorbestimmten Positionen des Stallfahrzeugs aktiviert und/oder deaktiviert und/oder verändert zu werden.

Eine weitere besonders bevorzugte Fortbildung des Stallfahrzeugs zeichnet sich dadurch aus, dass die Steuerungsvorrichtung angeordnet und ausgebildet ist, eine Hindernisposition zwei- oder mehrfach anzufahren zur Detektion eines bewegbaren oder stationären Hindernisses, und/oder die Steuerungsvorrichtung angeordnet und ausgebildet ist, ein detektiertes stationäres Hindernis für eine vorbestimmte Zeitspanne zu umfahren, und/oder die Steuerungsvorrichtung angeordnet und ausgebildet ist, ein detektiertes stationäres Hindernis nach einer vorbestimmten Zeitspanne erneut anzufahren. Somit kann gezielt eine Unterscheidung von Gegenständen und von Tieren erfolgen. Darüber hinaus kann ein Gegenstand in Bezug auf seine örtliche Flexibilität geprüft werden. Beispielsweise gibt es derartige Hindernisse bzw. Gegenstände, die langfristig ihren Ort nicht ändern. Darunter fallen beispielsweise Stützen oder Streben des Stalls bzw. der Volieren. Darüber hinaus sind auch derartige Gegenstände denkbar, die zwar für eine beschränkte Zeitdauer als Hindernis im Stall vorliegen, jedoch nicht langfristig im Stall verweilen. Hier ist es relevant, dass das Stallfahrzeug zwischen langfristigen und kurzfristig verweilenden Gegenständen im Stall unterscheiden kann, um somit gegebenenfalls das Fahrprofil anzupassen.

Es ist ferner bevorzugt, dass die Positionsbestimmungsvorrichtung eine Barcode-Leseeinheit und/oder eine QR (Quick Response) -Code-Leseeinheit und/oder eine Data-Matrix-Code- Leseeinheit umfasst. In einer weiteren bevorzugten Fortbildung ist vorgesehen, dass die Positionsbestimmungsvorrichtung angeordnet und ausgebildet ist, eine Position des Stallfahrzeugs innerhalb eines Geflügelstalls bei Staub- und/oder Schmutzbelastung zu bestimmen, wobei die Positionsbestimmungsvorrichtung vorzugsweise eine Ultrabreitbandeinheit und/oder eine RFID (radio-frequency identification) -Einheit und/oder eine Funkeinheit und/oder ein Odometer und/oder eine Inertialsensorik aufweist.

Eine schwimmende Lagerung kann auch als Gleitlagerung bezeichnet werden. Eine schwimmende Lagerung ermöglicht in vorteilhafter Weise eine selbsttätige Rückstellung in eine Ausgangsposition, die auch als Ruheposition bezeichnet werden kann.

Vorzugsweise erfolgt die schwimmende Lagerung des Gehäuses am Grundkörper über einen, 2, 3, 4 oder mehrere Lagerungspunkte. Besonders bevorzugt ist, dass mindestens 3, insbesondere 4, Lagerungspunkte vorgesehen sind. Die Lagerung erfolgt vorzugsweise über mindestens ein Federelement pro Lagerungspunkt.

Ferner vorzugsweise ist die schwimmende Lagerung derart ausgestaltet, dass sich ein Hubbereich, insbesondere in einer im Wesentlichen horizontalen Richtung, des Gehäuses gegenüber dem Grundkörper von mindestens +/- 25 mm, vorzugsweise +/- 30 mm, insbesondere mindestens +/- 50 mm ergibt. Insbesondere kann es bevorzugt sein, dass der Hubbereich in Richtung einer Hauptbewegungsrichtung des Stallfahrzeugs etwa +/- 50 mm beträgt und in einer Richtung orthogonal hierzu, die vorzugsweise ebenfalls im Wesentlichen horizontal ist und auch als Seitenrichtung bezeichnet werden kann, etwa +/-30 mm beträgt.

In einer bevorzugten Ausgestaltung ist die schwimmende Lagerung ausgebildet für eine selbsttätige Rückstellung in eine Ausgangsposition, vorzugsweise durch mindestens ein Federelement, wobei das Federelement vorzugsweise am Gehäuse oder Grundkörper angeordnet ist und/oder scheibenförmig ausgebildet ist und/oder Ausnehmungen aufweist.

Ein Federelement weist vorzugsweise eine entsprechende Rückstellkraft auf, um die genannten Bereiche zu realisieren. Das mindestens eine Federelement kann vorzugsweise aus einem elastischen Material bestehen oder ein elastisches Material aufweisen. Ein elastisches Material kann beispielsweise aus einem Polymer bestehen oder ein Polymer aufweisen, beispielsweise ein EPDM.

Vorzugsweise ist das Federelement scheibenförmig ausgebildet. Vorzugsweise ist die Ausdehnung des Federelements im Einbauzustand in einer horizontalen Ebene um ein Vielfaches größer als in einer vertikalen Richtung orthogonal zur horizontalen Ebene. Vorzugsweise besitzt das Federelement eine im Einbauzustand in vertikaler Richtung ausgerichtete Höhe von maximal 20 mm, bevorzugt maximal 15 mm, besonders bevorzugt maximal 10 mm. Die Form des Federelements in der horizontalen Ebene, die auch als Scheibenebene bezeichnet werden kann, ist beliebig, und kann bevorzugt rechteckig ausgebildet sein.

In einer bevorzugten Ausgestaltung ist das mindestens eine Federelement strukturiert ausgeführt. Als strukturierte Ausführung wird hier insbesondere eine Ausführung verstanden, die nicht massiv ist. Insbesondere ist es bevorzugt, dass das Federelement Ausnehmungen aufweist, die unregelmäßig oder regelmäßig sein können. Insbesondere können die Ausnehmungen jegliche geometrische Figur annehmen. Vorzugsweise sind die Ausnehmungen rund, elliptisch, dreieckig, rechteckig, pentagonal, hexagonal, oktogonal oder anders polygonal. Besonders bevorzugt ist eine wabenförmige Ausgestaltung, wobei eine Wabe insbesondere hexagonal sein kann. Ferner sind auch amorphe Strukturen möglich, beispielsweise durch die Verwendung von elastischen Schäumen. Die Ausnehmungen können einseitig oder mehrseitig offen oder als geschlossene Hohlräume ausgebildet sein.

Durch die Materialwahl und/oder durch die Strukturierung des Federelements, insbesondere durch Ausnehmungen, und/oder durch Kombinationen hiervon kann eine Federhärte und/oder eine Federkennlinie des Federelements realisiert werden, die den Anforderungen des Anwendungsgebiets entspricht. Beispielsweise bei der Verwendung von Polymeren sind unterschiedliche Härtegrade ausgehend vom selben Grundstoff möglich.

Das Federelement weist vorzugsweise eine Federwirkung primär oder ausschließlich in einer im Einbauzustand im Wesentlichen horizontalen Richtung auf.

Das mindestens eine Federelement kann am Gehäuse oder am Grundkörper angebracht sein. Bei der Verwendung von mehreren Federelementen können sämtliche Federelemente am Gehäuse oder am Grundkörper angeordnet sein. Auch eine Mischanordnung von Federelementen am Gehäuse und am Grundkörper ist möglich.

Vorzugsweise weist das Federelement eine Haltevorrichtung auf, die ausgebildet ist, das Federelement am Gehäuse und/oder am Grundkörper zu befestigen. Die Haltevorrichtung weist vorzugsweise Randbegrenzungen auf, die das Federelement an mindestens einer Seite, vorzugsweise an mindestens 4 Seiten umfassen. Eine Seite eines Federelements ist vorzugsweise eine im Einbauzustand im Wesentlichen vertikale Oberfläche des Federelements. Vorzugsweise weist die Haltevorrichtung einen Deckelteil auf, der einen Teil, insbesondere einen Randbereich, einer Scheibenfläche des Federelements umfasst. Eine Scheibenfläche des Federelements ist vorzugsweise eine im Einbauzustand horizontale Oberfläche des Federelements. Durch diese Ausgestaltungen kann ein sicherer Halt des Federelements in verschiedenen Positionen des Stallfahrzeugs gewährleistet werden und/oder ein Herausfallen des Federelements verhindert werden. Das Vorsehen eines Deckelteils der Haltevorrichtung kann ferner dazu beitragen, bei starker Auslenkung bzw. Beanspruchung des Federelements zu starke Ausstülpungen bzw. Verwölbungen des Federelements zu verhindern oder zu verringern. Die Randbegrenzungen der Haltevorrichtung sind vorzugsweise ausgebildet für eine Befestigung an dem Gehäuse und/oder dem Grundkörper. Hierzu können die Randbegrenzungen vorzugsweise Befestigungsflansche aufweisen.

Ferner vorzugsweise kann das Federelement eine Aufnahme für ein Befestigungselement, beispielsweise einen Stift, aufweisen. Vorzugsweise weist eine wabenförmig der Ausnehmung des Federelements eine solche Aufnahme auf.

Eine strukturierte Ausführung eines im Wesentlichen scheibenförmigen Federelements hat verschiedene Vorteile. Ein solches Federelement hat eine geringe Bauhöhe, insbesondere bei einer Ausführung als Wabenstruktur oder einer ähnlichen Struktur. Ein solches Federelement weist ferner eine hohe Schmutzresistenz und/oder eine hohe Ammoniakresistenz auf, was den Einsatz im Stall begünstigt. Ferner ist das Federelement in der Ausgangsposition, die auch als Ruheposition bezeichnet werden kann, vorzugsweise kraftlos. Dies kann zu einer erhöhten Lebensdauer der Federelemente beitragen. Zudem ist eine, gegebenenfalls auch nachträgliche, Montage der Federelemente einfach möglich, beispielsweise durch Aufstecken und/oder Aufsetzen.

Eine weitere bevorzugte Ausführungsvariante des Stallfahrzeugs zeichnet sich dadurch aus, dass dieses eine Kopplungsvorrichtung zum lösbaren Befestigen einer Funktionseinheit umfasst, wobei die Funktionseinheit vorzugsweise ausgewählt ist aus der Gruppe umfassend eine Einstreufräse, und/oder einen Einstreuschieber, und/oder eine Ausgabevorrichtung für Beschäftigungsmaterial, und/oder eine Kükenpapierausgabevorrichtung.

Ferner ist es bevorzugt, dass die Bewegungseinheit umfasst ein, zwei oder mehrere Räder, und/oder eine, zwei oder mehrere Raupenketten, wobei vorzugsweise die ein, zwei oder mehreren Räder und/oder die eine, zwei oder mehreren Raupenketten walkbar ausgebildet ist bzw. sind. Die Raupenketten können Kunststoff und/oder Stahl umfassen oder aus diesem bzw. diesen bestehen. Insbesondere sind elastische Materialien bevorzugt. Die walkbare Ausbildung begünstigt eine Selbstreinigung der Räder bzw. der Raupenketten, so dass eine Reinigung entfallen kann.

Es ist ferner bevorzugt, dass der emissionsfreie Antrieb einen elektrischen Antrieb, und/oder eine Brennstoffzelle umfasst. Des Weiteren ist es bevorzugt, dass das Stallfahrzeug einen Energiespeicher, insbesondere einen Akkumulator, umfasst.

Darüber hinaus ist ein Geflügelstall für Geflügeltiere bevorzugt, der umfasst eine Einstreu aufweisende Bodenfläche, mindestens eine Geflügelaufenthaltsvorrichtung, die sich auf der Bodenfläche abstützt, und ein Stallfahrzeug, nach mindestens einer der im Vorhergehenden genannten Ausführungsvarianten zum Bewegen auf der Einstreu aufweisenden Bodenfläche. Insbesondere ist es bevorzugt, dass der Geflügelstall umfasst eine Vielzahl an RFID-Transpondern, und/oder eine Ultrabreitbandvorrichtung, und/oder ein Positionsradarsystem, und/oder eine Vielzahl an Barcodes, und/oder eine Vielzahl an QR-Codes und/oder Data Matrix Codes, wobei die Vielzahl an QR-Codes und/oder Data Matrix Codes vorzugsweise an einer Decke des Geflügelstalls angeordnet ist, wobei die Vielzahl an RFID-Transpondern, und/oder die Ultrabreitbandvorrichtung, und/oder das Positionsradarsystem, und/oder die Vielzahl an Barcodes, und/oder die Vielzahl an QR-Codes und/oder Data Matrix Codes angeordnet und ausgebildet sind, mit einer Positionsbestimmungsvorrichtung des Stallfahrzeugs zusammenzuwirken.

Gemäß einem weiteren Aspekt der Erfindung, wird die eingangs genannte Aufgabe gelöst durch ein Verfahren nach Anspruch 11.

Insbesondere dient das Bewegen des Stallfahrzeugs auf der Einstreu aufweisenden Bodenfläche der Beeinflussung von Aufenthaltspositionen, insbesondere von Ruhepositionen von Geflügeltieren, insbesondere zur Reduktion einer Bodeneierquote und/oder zum Treiben von Geflügeltieren.

In einer bevorzugten Ausführungsvariante des Verfahrens ist vorgesehen, dass dieses umfasst Aktivieren einer Animation der Animiervorrichtung bei Positionierung des Stallfahrzeugs innerhalb eines Vorzugsbereichs und/oder im Bereich eines vordefinierten Animierbereichs, und/oder Erkennen eines Geflügeltieres und gezieltes Richten der Animation auf das Geflügeltier. Insbesondere ist es bevorzugt, dass die Animation ein optisches Signal und/oder das Emittieren eines Fluids, insbesondere Wasser, umfasst. Darüber hinaus ist es bevorzugt, dass das vorbestimmte Fahrprofil eine abzufahrende Fahrprofildistanz und/oder eine Fahrprofilzeitdauer aufweist, und sich das Stallfahrzeug mehr als 20 %, und/oder mehr als 30%, und/oder mehr als 40 %, und/oder mehr als 50 %, und/oder mehr als 60 %, und/oder mehr als 70 %, und/oder mehr als 80 % der Fahrprofildistanz innerhalb der anzufahrenden Vorzugsbereiche bewegt, und/oder sich das Stallfahrzeug mehr als 20 %, und/oder mehr als 30%, und/oder mehr als 40 %, und/oder mehr als 50 %, und/oder mehr als 60 %, und/oder mehr als 70 %, und/oder mehr als 80 % der Fahrprofilzeitdauer innerhalb der anzufahrenden Vorzugsbereiche bewegt.

Gemäß einem weiteren Aspekt der vorliegenden Erfindung, wird die eingangs genannte Aufgabe gelöst durch eine Verwendung eines Stallfahrzeugs nach mindestens einer der im Vorherigen beschriebenen Ausführungsvarianten in einem Geflügelstall für Geflügeltiere zur Beeinflussung von Aufenthaltspositionen von Geflügeltieren.

Darüber hinaus ist es bevorzugt, dass das Stallfahrzeug zur Reduktion einer Bodeneierquote und/oder zum Treiben von Geflügeltieren verwendet wird, wobei vorzugsweise die Geflügeltiere von einer Bodenfläche eines Stalls vertrieben werden, und/oder die Geflügeltiere in Ruhepositionen auf der Bodenfläche animiert werden, insbesondere um die Anzahl an Bodeneiern einer Herde zu reduzieren.

Das erfindungsgemäße Verfahren und seine möglichen Fortbildungen weisen Merkmale bzw. Verfahrensschritte auf, die sie insbesondere dafür geeignet machen, für ein erfindungsgemäßes Stallfahrzeug und seine Fortbildungen verwendet zu werden. Für weitere Vorteile, Ausführungsvarianten und Ausführungsdetails dieser weiteren Aspekte und ihrer möglichen Fortbildungen, wird auch auf die zuvor erfolgte Beschreibung zu den entsprechenden Merkmalen und Fortbildungen des Stallfahrzeugs verwiesen.

Bevorzugte Ausführungsformen der Erfindung werden beispielhaft anhand der beiliegenden Figuren erläutert. Es zeigen:
- Figur 1:: eine schematische, dreidimensionale Ansicht einer beispielhaften Ausführungsform eines Stallfahrzeugs;
- Figur 2:: eine dreidimensionale Explosionsansicht des Stallfahrzeugs aus Figur 1;
- Figur 3:: eine schematische, dreidimensionale, teilweise transparente Ansicht des Stallfahrzeugs aus Figur 1;
- Figur 4:: eine schematische, zweidimensionale Seitenansicht des Stallfahrzeugs nach Figur 1;
- Figur 5:: eine schematische, dreidimensionale Ansicht des Stallfahrzeugs aus Figur 1 mit einer Funktionseinheit;
- Figur 6:: eine schematische Seitenansicht einer weiteren beispielhaften Ausführungsform eines Stallfahrzeugs;
- Figur 7:: eine schematische Seitenansicht des Stallfahrzeugs aus Figur 6 mit einer anderen Funktionseinheit;
- Figur 8:: schematische Draufsichten auf drei beispielhafte Ausführungsformen von Stallfahrzeuggehäusen;
- Figur 9:: eine schematische Ansicht eines Stalls mit beispielhaften Ausführungsformen eines Fahrprofils;
- Figur 10:: eine schematische Ansicht eines Stalls mit einer beispielhaften Ausführungsform eines Stallfahrzeugs;
- Figur 11:: eine schematische Darstellung des Prinzips einer magnetischen Kollisionserkennung;
- Figur 12:: eine schematische, dreidimensionale Ansicht einer beispielhaften Ausführungsform eines Federelements;
- Figur 13:: schematische, dreidimensionale , teilgeschnittene Ansicht einer beispielhaften Ausführungsform eines Gehäuses mit vier Federelementen; und
- Figur 14:: schematische Schnittdarstellung durch ein an einem Grundkörper befestigtes Federelement.

In den Figuren sind gleiche oder im Wesentlichen funktionsgleiche bzw. -ähnliche Elemente mit den gleichen Bezugszeichen bezeichnet.

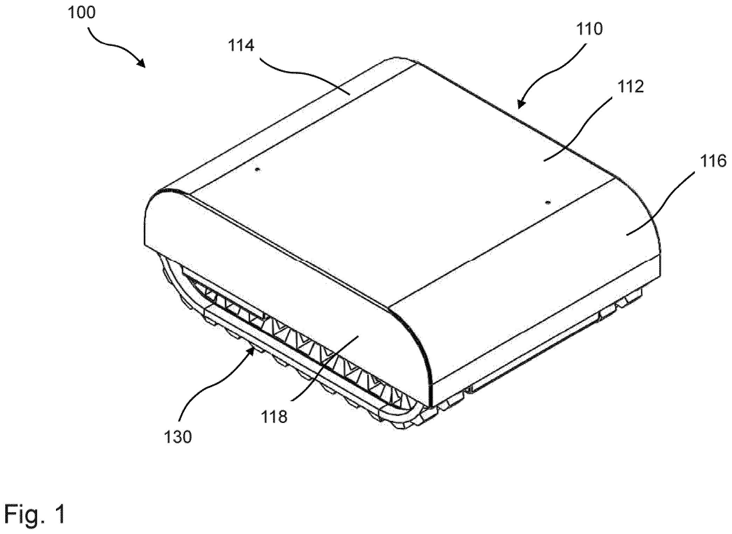

In den Figuren 1 bis 5 ist ein Stallfahrzeug 100 gezeigt, das ein Gehäuse 110 sowie eine erste Raupenvorrichtung 130 und eine zweite Raupenvorrichtung 140 aufweist. Das Gehäuse 110 umschließt den oberen Teil des Stallfahrzeugs 100 derart, dass jeweils die obere Hälfte der ersten und zweiten Raupenvorrichtung 130, 140 von dem Gehäuse 110 nach außen hin umschlossen ist. Das Gehäuse 110 umfasst ein Gehäuseoberteil 112, welches eine flächige und im Betrieb im Wesentlichen horizontale Erstreckung aufweist. Ferner umfasst das Gehäuse 110 ein erstes Gehäusestirnteil 114 und ein zweites Gehäusestirnteil 116, welches gebogen um den vorderen und/oder hinteren Teil des Stallfahrzeugs angeordnet ist. Darüber hinaus weist das Gehäuse 110 zwei Gehäuseseitenteile 118 auf.

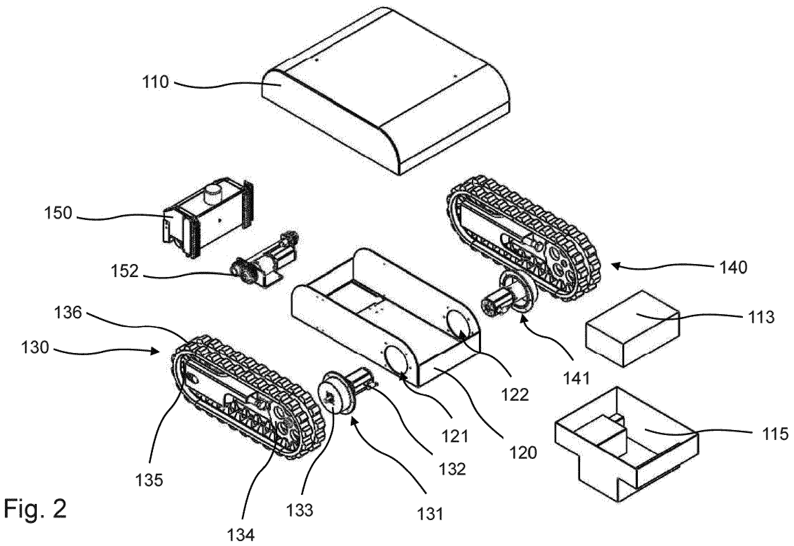

Insbesondere aus der Figur 2 wird der innere Aufbau des Stallfahrzeugs 100 ersichtlich. Unter anderem wird die erste Raupenvorrichtung 130 gezeigt, die neben der Raupenkette 136 ferner eine erste Antriebsachse 131 umfasst. Die Antriebsachse 131 weist einen Motor 132 sowie eine Kopplungseinheit 133 auf. Mit dieser Kopplungseinheit 133 ist der Motor 132 über eine erste Raupenscheibe 134 mit der Raupenkette 136 gekoppelt, sodass die Antriebsachse 131 über die erste Raupenscheibe 134 mit der Raupenkette 136 gekoppelt ist. Die zweite Raupenvorrichtung 140 ist analog aufgebaut und umfasst eine zweite Antriebsachse 141. Die Raupenkette 136 kann jedes geeignetes Material aufweisen. Insbesondere ist es bevorzugt, dass die Raupenkette 136 aus einem Kunststoff und/oder einem Stahl besteht oder diesen bzw. diese umfasst. Besonderes bevorzugt ist die Ausbildung der Raupenkette 136 auf einem Elastomer, insbesondere einem Kautschuk, oder dass die Raupenkette einen Elastomer, insbesondere einen Kautschuk, umfasst.

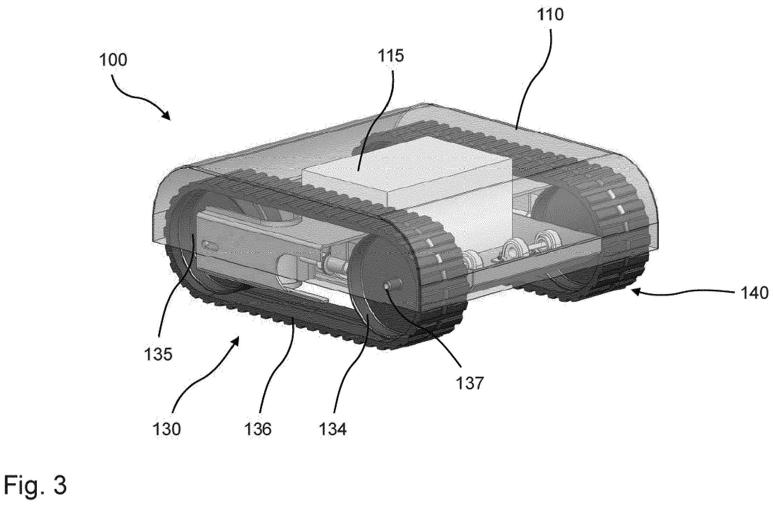

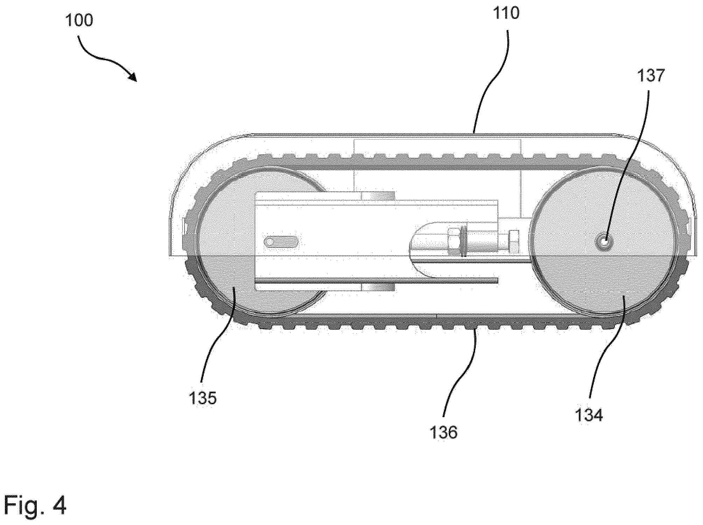

Darüber hinaus weist das Stallfahrzeug 100 einen Grundkörper 120 auf, an dem die Raupenvorrichtungen 130, 140 seitlich angeordnet werden, wobei die Motoren der Antriebsachsen 131, 141 durch Durchtrittsöffnungen 121, 122 in den Innenraum des Grundkörpers 120 hinein ragen. Darüber hinaus wird an dem Grundkörper 120 eine integrierte Positioniervorrichtung und Steuerungsvorrichtung 150 sowie ein Batteriekasten 115 mit einer Batterie 113 angeordnet. Ferner ist innerhalb des Grundkörpers 120 eine Hubeinheit 152 für die Positioniervorrichtung und Steuerungsvorrichtung 150 angeordnet, wobei vorzugsweise mit der Hubeinheit 152 die Positioniervorrichtung und Steuerungsvorrichtung 150 aus dem Stallfahrzeug entnommen werden kann Insbesondere in den Figuren 3 und 4 ist der spezifische Aufbau der Raupenvorrichtung 130, 140 gezeigt, wobei die Anordnung über eine erste Raupenscheibe 134 und eine zweite Raupenscheibe 135 ersichtlich wird. Diese zwei Raupenscheiben 134, 135 dienen dem Aufspannen der Raupenkette 136. Die erste Raupenscheibe 134 weist einen Achszapfen 137 auf.

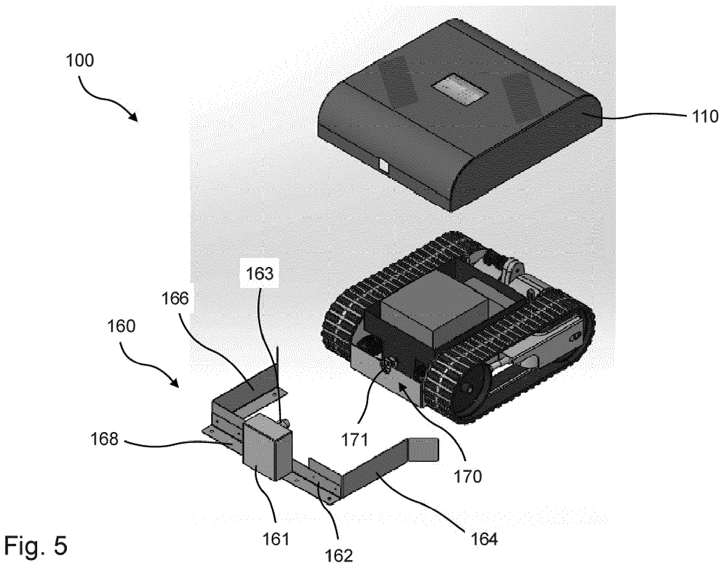

In der Figur 5 ist eine Ladestation 160 mit einer Vorderwand 162 und einer orthogonal zur Vorderwand 162 ebenfalls mit horizontaler Erstreckung angeordneten ersten Seitenwand 164 und einer zweiten Seitenwand 166. An der Vorderwand 162 ist ferner an der unteren Kante eine Horizontalwand 168 angeordnet. Die Ladestation 160 kann über eine Stationskopplungsvorrichtung 161 der Ladestation 160 und einer Fahrzeugkopplungsvorrichtung 170 des Stallfahrzeugs 100 mit dem Stallfahrzeug 100 verbunden und somit die Batterie des Stallfahrzeugs 100 geladen werden. Die Stationskopplungsvorrichtung 161 weist einen Kopplungspin 163 auf, der angeordnet und ausgebildet ist, in einer Kopplungsöffnung 171 der Fahrzeugkopplungsvorrichtung 170 angeordnet zu werden.

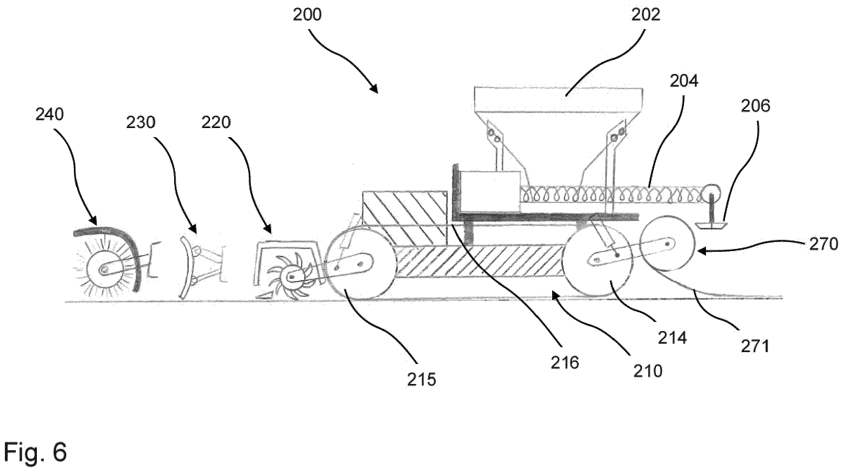

In Figur 6 ist ein Stallfahrzeug 200 gezeigt, welches einen Raupenantrieb aufweist mit einer ersten Raupenvorrichtung 210, die eine erste Raupenscheibe 214 und eine zweite Raupenscheibe 215 umfasst, die von einer Raupenkette 216 umschlungen sind. Das Stallfahrzeug 200 weist ferner einen Pickmaterialbehälter 202 auf, der über eine Fördervorrichtung 204 mit einer Pickschale 206 verbunden ist. Die Pickschale 206 bietet eine mobile Beförderung von Pickmaterial, sodass Geflügeltiere mittels des Stallfahrzeugs 200 einerseits Futter zugeführt werden kann, das darüber hinaus auch als Beschäftigungsmaterial dienen kann. Das Stallfahrzeug 200 weist darüber hinaus verschiedene Funktionseinheiten auf. Die Funktionseinheit kann beispielsweise eine Einstreufräse 220, eine Schubvorrichtung 230 sowie eine Kehreinheit 240 aufweisen oder als solche ausgebildet sein. Des Weiteren weist das Stallfahrzeug 200 eine Kükenpapierausgabevorrichtung 270 für Kükenpapier 271 auf. Auf dem Kükenpapier 271 kann Futter für Küken ausgestreut werden, damit sich die Küken bei der Nahrungsaufnahme nicht auf dem kalten Stallboden aufhalten müssen. Ferner erleichtert das Kükenpapier 271 die Reinigung des Stalls.

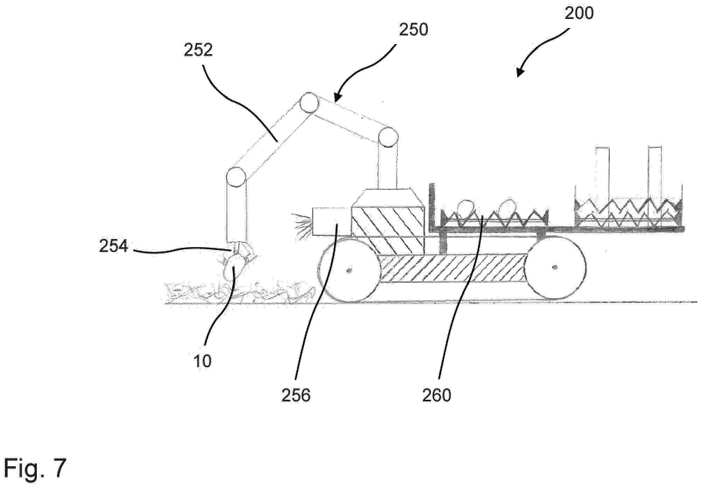

In Figur 7 ist das Stallfahrzeug 200 mit einer Eiersammelvorrichtung 250 ausgestattet, die einen Knickarmroboter 252 mit einem Eiergreifer 254 umfasst. Darüber hinaus weist das Stallfahrzeug 200 eine Eiererkennungsvorrichtung 256 auf, die vorzugsweise mit einer Steuervorrichtung des Knickarmroboters 252 und des Greifers 254 derart gekoppelt ist, dass ein erkanntes Ei 10 gezielt von dem Eiergreifer 254 erfasst werden kann.

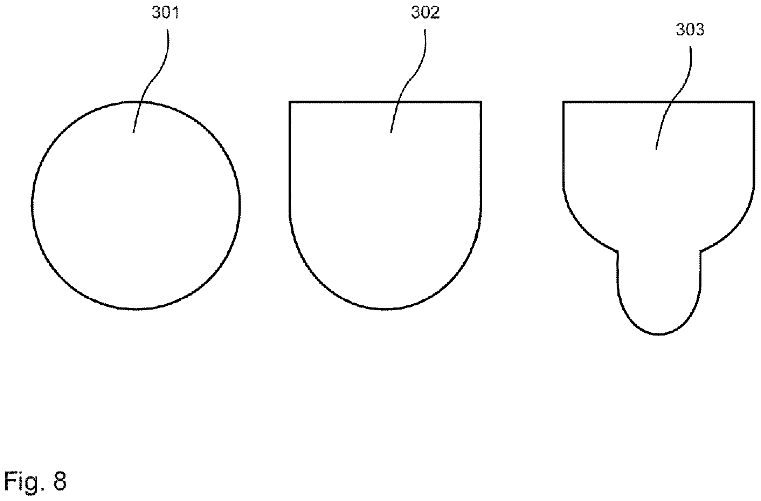

In Figur 8 sind Draufsichten von Gehäusen von Stallfahrzeugen gezeigt, die jeweils unterschiedliche Geometrien aufweisen. Das Gehäuse 301 weist eine kreisrunde Geometrie auf. Das Gehäuse 302 umfasst einen rechteckigen Abschnitt sowie einen halbkreisförmigen Abschnitt. Das Gehäuse 303 weist einen rechteckigen Abschnitt auf sowie einen ersten halbkreisförmigen Abschnitt, dessen Durchmesser die gleiche Erstreckung aufweist wie die Seite des rechteckigen Abschnitts an dem der halbkreisförmige Abschnitt angeordnet ist. An dem Scheitelpunkt des zuvor genannten halbkreisförmigen Abschnitts ist ein weiterer Abschnitt umfassend einen rechteckigen Abschnitt sowie einen teilkreisförmigen Abschnitt. Die unterschiedlichen Gehäuse 301, 302, 303 können für unterschiedliche Einsatzzwecke genutzt werden. Die Gehäuseform 302 hat insbesondere den Vorteil, dass diese bis in eine Ecke vorfahren kann. Der Vorteil des Gehäuses 301 liegt insbesondere an der geringen Gefahr von Verletzungen für Geflügeltiere.

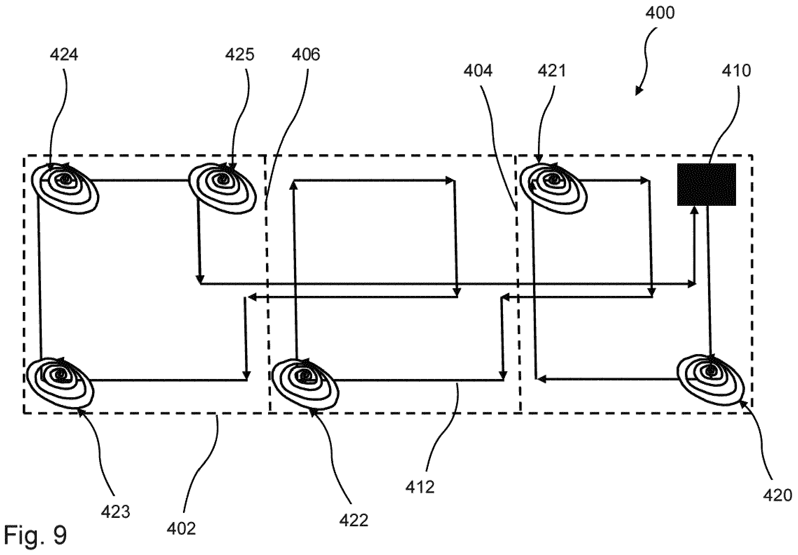

In Figur 9 ist ein Stall 400 gezeigt, mit einer äußeren Stallbegrenzung 402 und zwei inneren Stallbegrenzungen 404, 406. Die erste innere Stallbegrenzung 404 und die zweite innere Stallbegrenzung 406 sind als Wände ausgeführt, durch die die Geflügeltiere nicht hindurchtreten können. Die erste innere Stallbegrenzung 404 und die zweite innere Stallbegrenzung 406 weisen jedoch Durchtrittsmöglichkeiten auf, durch die sich auch ein Stallfahrzeug hindurch bewegen kann. In einer Ecke des Stalls ist ferner die Ladestation 410 angeordnet, die als Basisstation für das Stallfahrzeug zu erachten ist. Hier können die Batterien des Stallfahrzeugs aufgeladen und das Stallfahrzeug gesäubert werden. Darüber hinaus dient die Ladestation 410 als Ruhestation fürdas Stallfahrzeug, wenn dieses gerade nicht im Betrieb ist. Die Ladestation 410 kann beispielsweise analog zur in Figur 5 gezeigten Ladestation 160 ausgebildet sein.

Darüber hinaus ist der Figur 9 ein Fahrprofil eines Stallfahrzeugs zu entnehmen, welches durch die Pfeile und Kreise dargestellt ist. Das Fahrprofil umfasst zum einen das Bewegungsmuster 412, welches sich durch ein Abfahren der verschiedenen Stallbereiche auszeichnet. Darüber hinaus umfasst das Fahrprofil auch die sechs Vorzugsbereiche 420, 421, 422, 423, 424, 425, in denen sich das Stallfahrzeug besonders bevorzugt bewegt. Die Vorzugsbereiche 420 bis 425 werden vorzugsweise auf Basis von Erfahrungswerten gewählt, da hier insbesondere eine Häufung von Bodeneiern und/oder ein Verweilen von Geflügeltieren in Nachtzeiten erkannt wurden.

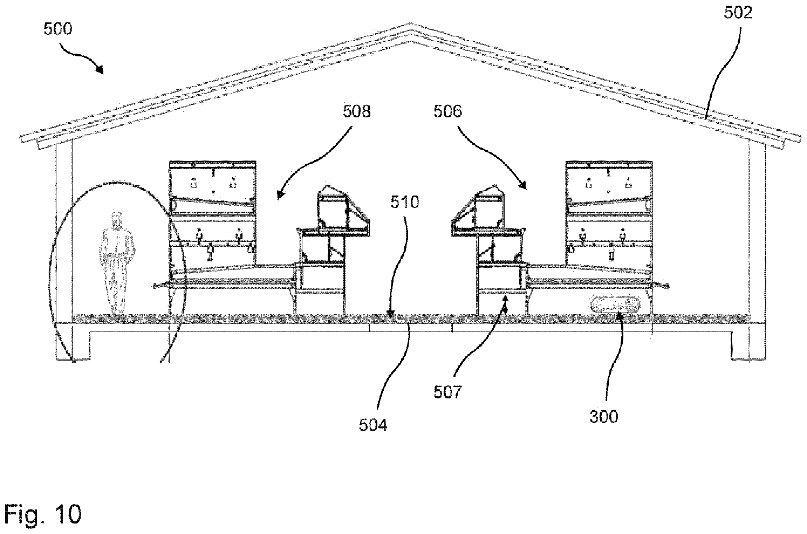

In Figur 10 ist ein Stall 500 mit einem Stalldach 502 und einer Bodenfläche 504 gezeigt, wobei auf der Bodenfläche 504 erste Stalleinbauten 506 und zweite Stalleinbauten 508 angeordnet sind. Die Stalleinbauten 506, 508 weisen eine lichte Höhe 507 unter sich auf. Das Stallfahrzeug 300 weist eine Stallfahrzeughöhe auf, die kleiner ist als die lichte Höhe 507 der Stalleinbauten 506, 508.

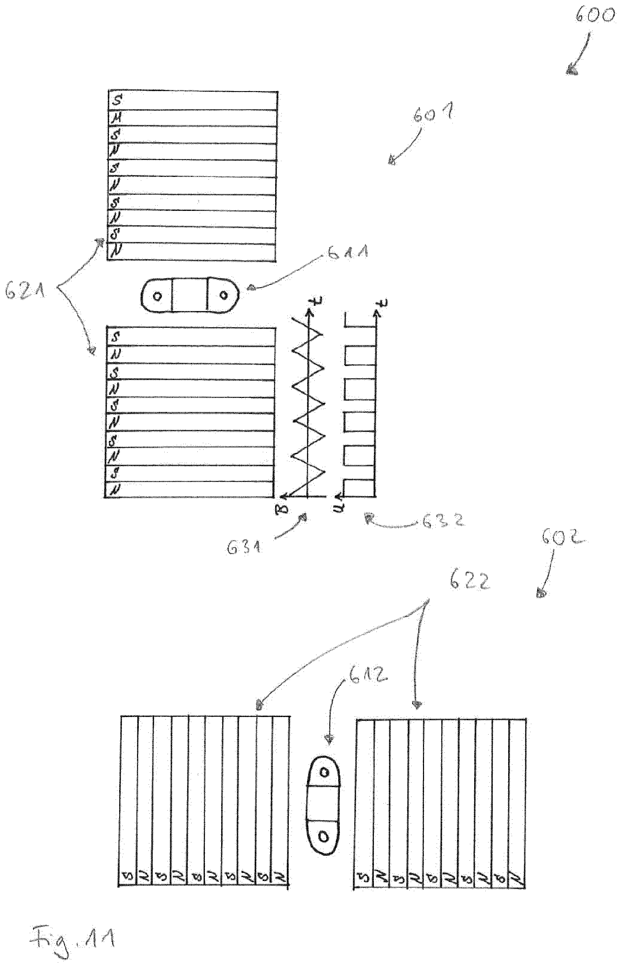

Mittels eines im Vorherigen beschriebenen Stallfahrzeugs 100, 200, 300 können die Aufenthaltspositionen, insbesondere Ruhepositionen von Geflügeltieren beeinflusst werden, insbesondere zur Reduktion einer Bodeneierquote und/oder zum Treiben von Geflügeltieren. Insbesondere durch das Abfahren eines Fahrprofils mit einem Bewegungsmuster 412 und mindestens einem Vorzugsbereich 420 bis 425 können die Bodeneierquote und das Übernächtigen von Tieren auf der Bodenfläche reduziert werden. Figur 11 zeigt eine schematische Darstellung des Prinzips einer magnetischen Kollisionserkennung mit einer Kollisionsdetektionsanordnung 600, die eine erste Kollisionsdetektionsvorrichtung 601 und eine zweite Kollisionsdetektionsvorrichtung 602 umfasst. Eine optikfreie Detektion in Form einer magnetischen Detektion hat den Vorteil, besonders gut für eine staubbelastete Umgebung im Stall geeignet zu sein.

Die beiden Kollisionsdetektionsvorrichtungen 601, 602 sind im Wesentlichen gleich ausgebildet, jedoch um 90° zueinander versetzt angeordnet. Auf diese Weise können unterschiedliche Kollisionsrichtungen detektiert werden. Durch das Vorsehen von zwei Kollisionsdetektionsvorrichtungen 601, 602 kann in besonders bevorzugter Weise eine Anschlagrichtung, insbesondere eine Richtung, in der sich ein die Kollision bzw. den Anschlag verursachendes Objekt befindet, beispielsweise bezogen auf einen Mittel- und/oder Referenzpunkt des Stallfahrzeugs und/oder bezogen auf eine, insbesondere momentane, Fortbewegungsrichtung des Stallfahrzeugs, erkannt werden.

Die erste Kollisionsdetektionsvorrichtung 601 weist einen ersten magnetischen Anschlagsensor 611 und ein erstes Referenzobjekt 621 auf. Die zweite Kollisionsdetektionsvorrichtung 602 weist einen zweiten magnetischen Anschlagsensor 612 und ein zweites Referenzobjekt 622 auf.

Der erste Anschlagsensor kann vorzugsweise am Chassis eines Stallfahrzeugs angeordnet sein, und das erste Referenzobjekt an einem schwimmend am Chassis gelagerten Gehäuse angeordnet sein, insbesondere an der Gehäuseunterseite. Der erste Anschlagsensor kann auch am Gehäuse und das erste Referenzobjekt am Chassis angeordnet sein. Die gleichen Anordnungsprinzipien gelten auch für die zweite Kollisionsdetektionsvorrichtung 602. Es können auch unterschiedliche Anordnungen fürdie erste und zweite Kollisionsdetektionsvorrichtung 601, 602 gewählt werden.

Die Kollisionsdetektionsvorrichtungen 601, 602 sind angeordnet und ausgebildet, einen Kontakt mit einem Hindernis, insbesondere einem Gegenstand und/oder einem Tier, zu erkennen, vorzugsweise unabhängig von der Fortbewegungsrichtung des Stallfahrzeugs, also beispielsweise auch bei einer Rückwärts- und/oder Seitwärtsfahrt des Stallfahrzeugs.

Die magnetische Kollisionserkennung ist vorzugsweise als eine stetige Messung ausgebildet, vorzugsweise mit der Möglichkeit, mehrere Schwellwerte in den Anschlagsensoren 611, 612 und/oder in einer Sensorsteuerung zu hinterlegen. Die Referenzobjekte 621, 622 sind aus magnetischem Material ausgebildet und umfassen ein magnetisches Muster, hier jeweils eine alternierende Folge von Nord- und Südpolen. Eine Messung der relativen Bewegung von erstem Anschlagsensor und erstem Referenzobjekt zueinander kann über eine Zählung der Polwechsel erfolgen. In den Graphen 631 und 632 sind die bei einer solchen relativen Bewegung entstehenden Verläufe der magnetischen Flussdichte B und der elektrischen Spannung U für die erste Kollisionsdetektionsvorrichtung 601 aufgetragen. Entsprechend kann auch eine Messung der relativen Bewegung von zweitem Anschlagsensor und zweitem Referenzobjekt zueinander über eine Zählung der Polwechsel erfolgen, wodurch sich ebenfalls entsprechende Verläufe der magnetischen Flussdichte B und der elektrischen Spannung U ergeben.

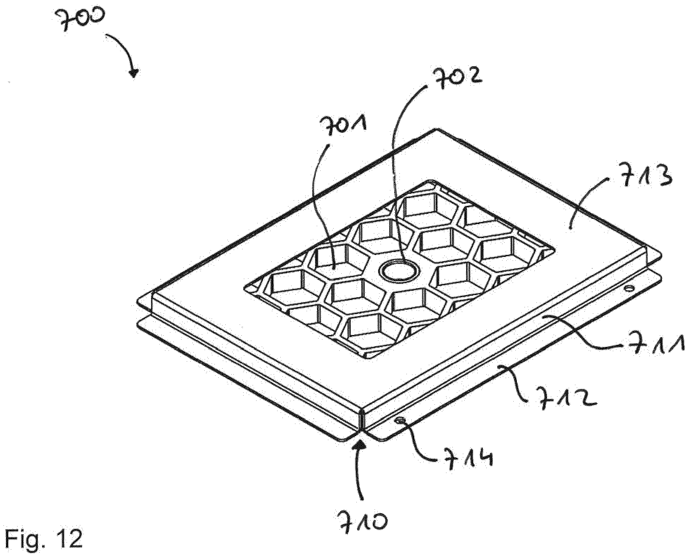

In den Figuren 12 bis 14 ist eine beispielhafte Ausführungsform eines Federelements 700 und dessen Verwendung für eine schwimmende Lagerung des Gehäuses 110 am Grundkörper 120 dargestellt. Das Federelement 700 ist nicht massiv, sondern strukturiert ausgebildet und weist mehrere regelmäßige Ausnehmungen 701 in Form von hexagonalen Waben auf, die an ihren Ober- und Unterseiten offen sind. Eine mittlere Wabe weist eine Aufnahme 702 für ein Befestigungselement in Form eines Befestigungsstifts 720 auf.

Das Federelement 700 weist ferner eine Haltevorrichtung 710 auf, die einen Deckelteil 713 sowie Randbegrenzungen 711 mit Befestigungsflanschen 712 aufweist. And den Befestigungsflanschen 712 sind Befestigungslöcher 714 vorgesehen.

Das Federelement 700 ist im wesentlichen scheibenförmig ausgebildet und weist im Einbauzustand eine Erstreckung in einer im Wesentlichen horizontalen Ebene auf, die ein Vielfaches der im Einbauzustand im Wesentlichen vertikalen Höhe des Federelements beträgt.

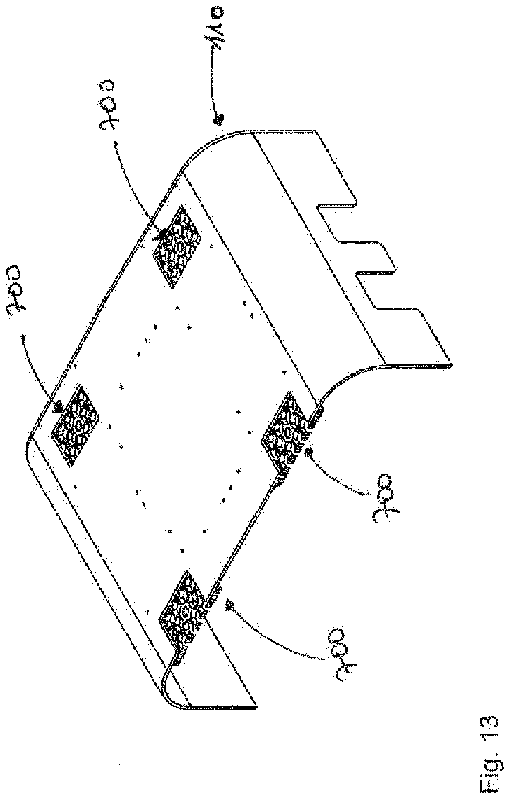

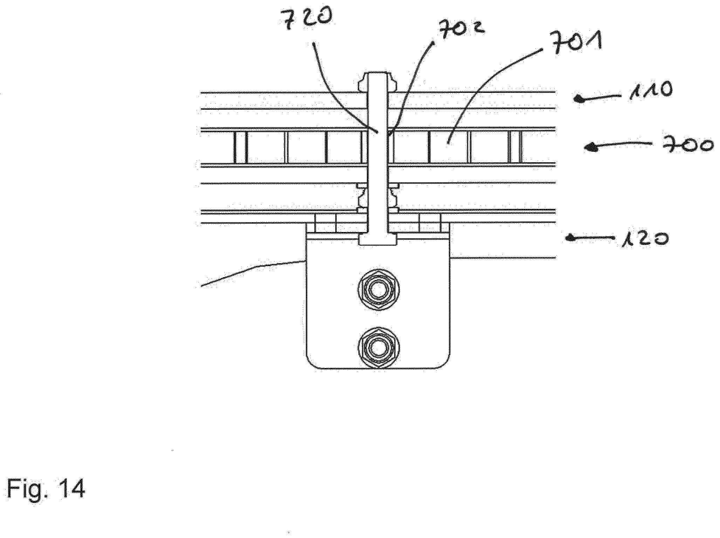

Vorzugsweise können, wie in Figur 13 dargestellt, vier Lagerungspunkte mit je einem Federelement 700 vorgesehen sein. In Figur 14 ist eine Befestigung des Federelements am Grundkörper 120 gezeigt, bei der der Befestigungsstift 720 am Grundkörper 120 befestigt ist und in Richtung des Gehäuses 110 nach oben ragt und dabei in die Aufnahme 702 einer Wabe des Federelements 700 greift.

Eine strukturierte Ausgestaltung von scheibenförmigen Federelementen hat den Vorteil einer geringen Bauhöhe, einer hohen Schmutz- und Ammoniakresistenz sowie einer einfachen Montage.

Mit der Kollisionsdetektionsanordnung 600 können Kollisionen des Stallfahrzeugs mit Geflügeltieren und/oder Gegenständen erkannt werden. Dadurch wird es möglich, basierend auf einer Kollision eine angemessene Steuerung vorzusehen, beispielsweise das Stallfahrzeug zu stoppen.

### BEZUGSZEICHEN

- 10: Ei
- 100, 200, 300: Stallfahrzeug
- 110,301,302,303: Gehäuse
- 112: Gehäuseoberteil
- 113: Batterie
- 114: erstes Gehäusestirnteil
- 115: Batteriekasten
- 116: zweites Gehäusestirnteil
- 118: Gehäuseseitenteil
- 120: Grundkörper
- 121, 122: Durchtrittsöffnungen
- 130, 210: erste Raupenvorrichtung
- 131: erste Antriebsachse
- 132: Motor
- 133: Kopplungseinheit
- 134, 214: erste Raupenscheibe
- 135, 215: zweite Raupenscheibe
- 136,216: Raupenkette
- 137: Achszapfen
- 140: zweite Raupenvorrichtung
- 141: zweite Antriebsachse
- 150: Positioniervorrichtung, Steuerungsvorrichtung
- 152: Hubeinheit
- 160, 410: Ladestation
- 161: Stationskopplungsvorrichtung
- 162: Vorderwand
- 163: Kopplungspin
- 164: erste Seitenwand
- 166: zweite Seitenwand
- 168: Horizontalwand
- 170: Fahrzeugkopplungsvorrichtung
- 171: Kopplungsöffnung
- 202: Pickmaterialbehälter
- 204: Fördervorrichtung
- 206: Pickschale
- 220: Einstreufräse
- 230: Schubvorrichtung
- 240: Kehreinheit
- 250: Eiersammelvorrichtung
- 252: Knickarm
- 254: Eiergreifer
- 256: Eiererkennungsvorrichtung
- 260: Eiablage
- 270: Kükenpapierausgabevorrichtung
- 271: Kükenpapier
- 400, 500: Stall
- 402: äußere Stallbegrenzung
- 404: erste innere Stallbegrenzung
- 406: zweite innere Stallbegrenzung
- 412: Bewegungsmuster
- 420: erster Vorzugsbereich
- 421: zweiter Vorzugsbereich
- 422: dritter Vorzugsbereich
- 423: vierter Vorzugsbereich
- 424: fünfter Vorzugsbereich
- 425: sechster Vorzugsbereich
- 502: Dach
- 504: Bodenfläche
- 506: erster Stalleinbauten
- 507: lichte Höhe
- 508: zweite Stalleinbauten
- 510: Einstreu
- 600: Kollisionsdetektionsanordnung
- 601: erste Kollisionsdetektionsvorrichtung
- 602: zweite Kollisionsdetektionsvorrichtung
- 611: erster Anschlagsensor
- 612: zweiter Anschlagsensor
- 621: erstes Referenzobjekt
- 622: zweites Referenzobjekt
- 631: magnetische Flussdichte B
- 632: elektrische Spannung U
- 700: Federelement
- 701: Ausnehmung
- 702: Aufnahme
- 710: Haltevorrichtung
- 711: Randbegrenzung
- 712: Flansch
- 713: Deckelteil
- 714: Befestigungsloch
- 720: Befestigungsstift

## Patentansprüche

1. Stallfahrzeug (100, 200, 300) zum Bewegen auf einer Einstreu (510) aufweisenden Bodenfläche (504) eines Geflügelstalls (400, 500) zur Beeinflussung von Aufenthaltspositionen von Geflügeltieren umfassend
- einen im Wesentlichen emissionsfreien Antrieb,
- mindestens eine mit dem Antrieb gekoppelte Bewegungseinheit, wobei die Bewegungseinheit angeordnet und ausgebildet ist, ein Bewegen des Stallfahrzeugs (100, 200, 300) auf der Einstreu zu ermöglichen,
- eine Positionsbestimmungsvorrichtung zur Bestimmung einer Position des Stallfahrzeugs (100, 200, 300) relativ zu Stalleinbauten (506, 508),
- eine Steuerungsvorrichtung (150) zur Bereitstellung eines vorbestimmten Fahrprofils und zur Steuerung des Antriebs nach dem bereitgestellten Fahrprofil , wobei das Fahrprofil mindestens ein Bewegungsmuster (412) und mindestens einen anzufahrenden Vorzugsbereich (420, 421, 422, 423, 424, 425) innerhalb des Geflügelstalls umfasst,
- wobei das Fahrprofil zwei oder mehr Vorzugsbereiche (420, 421, 422, 423, 424, 425) umfasst und
- die Vorzugsbereiche (420, 421, 422, 423, 424, 425) bevorzugte Plätze der Geflügeltiere umfassen, und
- **dadurch gekennzeichnet, dass** die Steuerungsvorrichtung (150) zur Bereitstellung eines ersten Fahrprofils und eines zweiten Fahrprofils ausgebildet ist, wobei sich ein erstes Bewegungsmuster (412) des ersten Fahrprofils von einem zweiten Bewegungsmuster (412) des zweiten Fahrprofils unterscheidet, und die Steuerungsvorrichtung (150) angeordnet und ausgebildet ist, das erste Fahrprofil und das zweite Fahrprofil zeitabhängig bereitzustellen.

2. Stallfahrzeug (100, 200, 300) nach dem vorhergehenden Anspruch, wobei eine Stallfahrzeughöhe kleiner ist als 450 mm.

3. Stallfahrzeug (100, 200, 300) nach mindestens einem der vorhergehenden Ansprüche, wobei das vorbestimmte Fahrprofil eine abzufahrende Fahrprofildistanz und/oder eine Fahrprofilzeitdauer aufweist und die Steuerungsvorrichtung (150) angeordnet und ausgebildet ist, ein Bewegen des Stallfahrzeugs (100, 200, 300) derart zu steuern, dass
- sich das Stallfahrzeug (100, 200, 300) mehr als 20 %, und/oder 30%, und/oder 40 %, und/oder 50 %, und/oder 60 %, und/oder 70 %, und/oder 80 % der Fahrprofildistanz innerhalb der anzufahrenden Vorzugsbereiche (420, 421, 422, 423, 424, 425) bewegt, und/oder
- sich das Stallfahrzeug (100, 200, 300) mehr als 20 %, und/oder 30%, und/oder 40 %, und/oder 50 %, und/oder 60 %, und/oder 70 %, und/oder 80 % der Fahrprofilzeitdauer innerhalb der anzufahrenden Vorzugsbereiche (420, 421, 422, 423, 424, 425) bewegt.

4. Stallfahrzeug (100, 200, 300) nach mindestens einem der vorhergehenden Ansprüche, umfassend
- eine Animiervorrichtung mit mindestens einer Animation,
- wobei die Steuerungsvorrichtung (150) vorzugsweise angeordnet und ausgebildet ist, die Animation bei Positionierung des Stallfahrzeugs (100, 200, 300) innerhalb eines Vorzugsbereichs (420, 421, 422, 423, 424, 425) und/oder im Bereich eines vordefinierten Animationsbereichs zu aktivieren und/oder die Animation in Abhängigkeit der Zeit zu aktivieren und/oder zu deaktivieren und/oder zu verändern.

5. Stallfahrzeug (100, 200, 300) nach mindestens einem der vorhergehenden Ansprüche, wobei
die Animiervorrichtung angeordnet und ausgebildet ist,
- mindestens ein optisches Signal, und/oder
- mindestens ein akustisches Signal, und/oder
- ein Fluid
- als Animation zu emittieren.

6. Stallfahrzeug (100, 200, 300) nach mindestens einem der vorhergehenden Ansprüche,
- wobei in der Steuerungsvorrichtung (150) ein Bezugsmodell eines Geflügelstalls (400, 500) hinterlegt ist und das Fahrprofil bzw. die Fahrprofile auf Grundlage des Bezugsmodells ermittelt ist bzw. sind,
- wobei vorzugsweise das Bezugsmodell des Geflügelstalls (400, 500) umfasst
∘ Stallbegrenzungen (402, 404, 406), und/oder
∘ Einbauten, und/oder
∘ Durchgänge zwischen zwei oder mehreren Stallabschnitten, insbesondere Aufenthaltsbereichen.

7. Stallfahrzeug (100, 200, 300) nach mindestens einem der vorhergehenden Ansprüche, umfassend
- ein Gehäuse (110, 301, 302, 303), das eine einstreuabgewandte Oberseite des Stallfahrzeugs (100, 200, 300) und/oder mindestens abschnittsweise Seitenflächen des Stallfahrzeugs (100, 200, 300) umschließt, wobei
- das Gehäuse (110, 301, 302, 303) schwimmend gelagert ist, und/oder
- das Gehäuse (110, 301, 302, 303) mindestens einen Anschlagsensor (611, 612) umfasst, der angeordnet und ausgebildet ist, einen Kontakt des Gehäuses (110, 301, 302, 303) mit einem Hindernis, insbesondere einem Gegenstand und/oder einem Tier, zu erkennen, wobei der Anschlagsensor vorzugsweise von einer Lagerung des Gehäuses (110, 301, 302, 303) umfasst ist.

8. Stallfahrzeug (100, 200, 300) nach mindestens einem der vorhergehenden Ansprüche, wobei
- der mindestens eine Anschlagsensor (611, 612) nach dem vorhergehenden Anspruch angeordnet und ausgebildet ist, eine Anschlagrichtung zu erkennen, und/oder
- der mindestens eine Anschlagsensor (611, 612) nach dem vorhergehenden Anspruch eine veränderliche Sensitivität aufweist, welche vorzugsweise in Abhängigkeit einer durch die Positionsbestimmungsvorrichtung bestimmten Position des Stallfahrzeugs (100, 200, 300) veränderlich ist, und/oder
- der mindestens eine Anschlagsensor (611, 612) nach dem vorhergehenden Anspruch angeordnet und ausgebildet ist, in vorbestimmten Positionen des Stallfahrzeugs (100, 200, 300) aktiviert und/oder deaktiviert und/oder verändert zu werden und/oder
- die Steuerungsvorrichtung (150) angeordnet und ausgebildet ist, eine Hindernisposition zwei- oder mehrfach anzufahren zur Detektion eines bewegbaren oder stationären Hindernisses, und/oder
- die Steuerungsvorrichtung (150) angeordnet und ausgebildet ist, ein detektiertes stationäres Hindernis für eine vorbestimmte Zeitspanne zu umfahren, und/oder
- die Steuerungsvorrichtung (150) angeordnet und ausgebildet ist, ein detektiertes stationäres Hindernis nach einer vorbestimmten Zeitspanne erneut anzufahren, und/oder
- die Positionsbestimmungsvorrichtung eine Barcode- Leseeinheit und/oder eine QR-Code-Leseeinheit und/oder eine Data-Matrix-Code- Leseeinheit umfasst, und/oder
- die Positionsbestimmungsvorrichtung angeordnet und ausgebildet ist, eine Position des Stallfahrzeugs (100, 200, 300) innerhalb eines Geflügelstalls bei Staub- und/oder Schmutzbelastung zu bestimmen, wobei die Positionsbestimmungsvorrichtung vorzugsweise eine Ultrabreitbandeinheit und/oder eine RFID-Einheit und/oder eine Funkeinheit und/oder ein Odometer und/oder eine Inertialsensorik aufweist, und/oder
- die schwimmende Lagerung nach dem vorhergehenden Anspruch ausgebildet ist für eine selbsttätige Rückstellung in eine Ausgangsposition, vorzugsweise durch mindestens ein Federelement, wobei das Federelement vorzugsweise am Gehäuse (110, 301, 302, 303) oder Grundkörper (120) angeordnet ist und/oder scheibenförmig ausgebildet ist und/oder Ausnehmungen aufweist.

9. Stallfahrzeug (100, 200, 300) nach mindestens einem der vorhergehenden Ansprüche, umfassend
- eine Kopplungsvorrichtung zum lösbaren Befestigen einer Funktionseinheit,
- wobei die Funktionseinheit vorzugsweise ausgewählt ist aus der Gruppe umfassend
∘ eine Einstreufräse (220), und/oder
∘ einen Einstreuschieber, und/oder
∘ eine Ausgabevorrichtung für Beschäftigungsmaterial, und/oder
∘ eine Kükenpapierausgabevorrichtung (270).

10. Stallfahrzeug (100, 200, 300) nach mindestens einem der vorhergehenden Ansprüche, wobei
die Bewegungseinheit umfasst
- ein, zwei oder mehrere Räder, und/oder
- eine, zwei oder mehrere Raupenketten (136, 216),
- wobei vorzugsweise die ein, zwei oder mehreren Räder und/oder die eine, zwei oder mehreren Raupenketten (136, 216) walkbar ausgebildet ist bzw. sind,
und/oder
wobei der emissionsfreie Antrieb umfasst
- einen elektrischen Antrieb, und/oder
- eine Brennstoffzelle.

11. Verfahren zum Bewegen eines Stallfahrzeugs (100, 200, 300) auf einer Einstreu (510) aufweisenden Bodenfläche (504) eines Geflügelstalls (400, 500) zur Beeinflussung von Aufenthaltspositionen von Geflügeltieren umfassend
- Bereitstellen eines Stallfahrzeugs (100, 200, 300), insbesondere eines Stallfahrzeugs (100, 200, 300) nach mindestens einem der Ansprüche 1-10, innerhalb eines Geflügelstalls mit mindestens einer Geflügelaufenthaltsvorrichtung;
- Bewegen des Stallfahrzeugs (100, 200, 300) mit einem vorbestimmten Fahrprofil, wobei das Fahrprofil mindestens ein Bewegungsmuster (412) und mindestens einen anzufahrenden Vorzugsbereich (420, 421, 422, 423, 424, 425) innerhalb des Geflügelstalls umfasst,
- wobei das Fahrprofil zwei oder mehr Vorzugsbereiche (420, 421, 422, 423, 424, 425) umfasst und
- die Vorzugsbereiche (420, 421, 422, 423, 424, 425) bevorzugte Plätze der Geflügeltiere umfassen, und
- **dadurch gekennzeichnet, dass** die Steuerungsvorrichtung (150) zur Bereitstellung eines ersten Fahrprofils und eines zweiten Fahrprofils ausgebildet ist, wobei sich ein erstes Bewegungsmuster (412) des ersten Fahrprofils von einem zweiten Bewegungsmuster (412) des zweiten Fahrprofils unterscheidet, und die Steuerungsvorrichtung (150) angeordnet und ausgebildet ist, das erste Fahrprofil und das zweite Fahrprofil zeitabhängig bereitzustellen.

12. Verfahren nach dem vorherigen Anspruch 11,
umfassend
- Aktivieren einer Animation der Animiervorrichtung bei Positionierung des Stallfahrzeugs (100, 200, 300) innerhalb eines Vorzugsbereichs (420, 421, 422, 423, 424,425) und/oder im Bereich eines vordefinierten Animierbereichs, und/oder
- Erkennen eines Geflügeltieres und gezieltes Richten der Animation auf das Geflügeltier,
und/oder
wobei das vorbestimmte Fahrprofil eine abzufahrende Fahrprofildistanz und/oder eine Fahrprofilzeitdauer aufweist, und
- sich das Stallfahrzeug (100, 200, 300) mehr als 20 %, und/oder 30%, und/oder 40 %, und/oder 50 %, und/oder 60 %, und/oder 70 %, und/oder 80 % der Fahrprofildistanz innerhalb der anzufahrenden Vorzugsbereiche (420, 421, 422, 423, 424, 425) bewegt, und/oder
- sich das Stallfahrzeug (100, 200, 300) mehr als 20 %, und/oder 30%, und/oder 40 %, und/oder 50 %, und/oder 60 %, und/oder 70 %, und/oder 80 % der Fahrprofilzeitdauer innerhalb der anzufahrenden Vorzugsbereiche (420, 421, 422, 423, 424, 425) bewegt.

13. Verwendung eines Stallfahrzeugs (100, 200, 300) nach mindestens einem der Ansprüche 1-10 in einem Geflügelstall für Geflügeltiere zur Beeinflussung von Aufenthaltspositionen von Geflügeltieren.

## Claims

1. Animal-pen vehicle (100, 200, 300) for moving on a floor surface (504) with bedding (510) of a poultry pen (400, 500) for the purposes of influencing positions at which poultry animals are residing, comprising
- a substantially emissions-free drive,
- at least one movement unit which is coupled to the drive, wherein the movement unit is arranged and designed to permit a movement of the animal-pen vehicle (100, 200, 300) on the bedding,
- a position-determining device for determining a position of the animal-pen vehicle (100, 200, 300) relative to animal-pen fixtures (506, 508),
- a control device (150) for providing a predetermined travel profile and for controlling the drive according to the provided travel profile, wherein the travel profile comprises at least one movement pattern (412) and at least one preferential area (420, 421, 422, 423, 424, 425) that is to be travelled to within the poultry pen,
- wherein the travel profile comprises two or more preferential areas (420, 421, 422, 423, 424, 425) and
- the preferential areas (420, 421, 422, 423, 424, 425) comprise preferred locations of the poultry animals, and
- **characterized in that** the control device (150) is designed to provide a first travel profile and a second travel profile, wherein a first movement pattern (412) of the first travel profile differs from a second movement pattern (412) of the second travel profile, and the control device (150) is arranged and designed to provide the first travel profile and the second travel profile in a time-dependent manner.

2. Animal-pen vehicle (100, 200, 300) as claimed in the preceding claim, wherein an animal-pen vehicle height is smaller than 450 mm.

3. Animal-pen vehicle (100, 200, 300) as claimed in at least one of the preceding claims, wherein the predetermined travel profile has a travel profile distance to be travelled and/or a travel profile duration, and the control device (150) is arranged and designed to control a movement of the animal-pen vehicle (100, 200, 300) such that
- the animal-pen vehicle (100, 200, 300) moves within the preferential areas (420, 421, 422, 423, 424, 425) that are to be travelled to over more than 20%, and/or 30%, and/or 40%, and/or 50%, and/or 60%, and/or 70%, and/or 80% of the travel profile distance, and/or
- the animal-pen vehicle (100, 200, 300) moves within the preferential areas (420, 421, 422, 423, 424, 425) that are to be travelled to over more than 20%, and/or 30%, and/or 40%, and/or 50%, and/or 60%, and/or 70%, and/or 80% of the travel profile duration.

4. Animal-pen vehicle (100, 200, 300) as claimed in at least one of the preceding claims, comprising
- an animating device with at least one animation,
- wherein the control device (150) is preferably arranged and designed to activate the animation when the animal-pen vehicle (100, 200, 300) is positioned within a preferential area (420, 421, 422, 423, 424, 425) and/or in the region of a predefined animation area and/or to activate and/or deactivate and/or vary the animation in a manner dependent on the time.

5. Animal-pen vehicle (100, 200, 300) as claimed in at least one of the preceding claims, wherein the animating device is arranged and designed to emit
- at least one optical signal, and/or
- at least one acoustic signal, and/or
- a fluid
as animation.

6. Animal-pen vehicle (100, 200, 300) as claimed in at least one of the preceding claims,
- wherein a reference model of a poultry pen (400, 500) is stored in the control device (150), and the travel profile or the travel profiles is or are determined on the basis of the reference model,
- wherein, preferably, the reference model of the poultry pen (400, 500) comprises
∘ animal-pen boundaries (402, 404, 406), and/or
∘ fixtures, and/or
∘ passages between two or more animal-pen sections, in particular residence areas.

7. Animal-pen vehicle (100, 200, 300) as claimed in at least one of the preceding claims, comprising
- a housing (110, 301, 302, 303) which encloses a top side, averted from the bedding, of the animal-pen vehicle (100, 200, 300) and/or, at least in certain portions, side surfaces of the animal-pen vehicle (100, 200, 300), wherein
- the housing (110, 301, 302, 303) is mounted in floating fashion, and/or
- the housing (110, 301, 302, 303) comprises at least one impact sensor (611, 612) which is arranged and designed to detect contact of the housing (110, 301, 302, 303) with an obstruction, in particular with an object and/or an animal, wherein the impact sensor is preferably comprised by a mounting arrangement of the housing (110, 301, 302, 303).

8. Animal-pen vehicle (100, 200, 300) as claimed in at least one of the preceding claims, wherein
- the at least one impact sensor (611, 612) as claimed in the preceding claim is arranged and designed to detect an impact direction, and/or
- the at least one impact sensor (611, 612) as claimed in the preceding claim has a variable sensitivity, which is preferably variable in a manner dependent on a position of the animal-pen vehicle (100, 200, 300) determined by the position-determining device, and/or
- the at least one impact sensor (611, 612) as claimed in the preceding claim is arranged and designed to be activated and/or deactivated and/or varied in predetermined positions of the animal-pen vehicle (100, 200, 300), and/or
- the control device (150) is arranged and designed to travel to an obstruction position two or more times for the purposes of detecting a movable or static obstruction, and/or
- the control device (150) is arranged and designed to travel around a detected static obstruction for a predetermined period of time, and/or
- the control device (150) is arranged and designed to travel to a detected static obstruction again after a predetermined period of time, and/or
- the position-determining device comprises a barcode reading unit and/or a QR code reading unit and/or a data matrix code reading unit, and/or
- the position-determining device is arranged and designed to determine a position of the animal-pen vehicle (100, 200, 300) within a poultry pen when contaminated with dust and/or dirt, wherein the position-determining device preferably has an ultra-wideband unit and/or an RFID unit and/or a radio unit and/or an odometer and/or an inertial sensor arrangement, and/or
- the floating mounting arrangement as claimed in the preceding claim is designed for automatic resetting into an initial position, preferably by means of at least one spring element, wherein preferably the spring element is arranged on the housing (110, 301, 302, 303) or main body (120) and/or is of disk-shaped form and/or has recesses.

9. Animal-pen vehicle (100, 200, 300) as claimed in at least one of the preceding claims, comprising
- a coupling device for the detachable fastening of a functional unit,
- wherein the functional unit is preferably selected from the group comprising
∘ a bedding tiller (220), and/or
∘ a bedding pusher, and/or
∘ a dispensing device for manipulable material, and/or
∘ a chick paper dispensing device (270).

10. Animal-pen vehicle (100, 200, 300) as claimed in at least one of the preceding claims, wherein
the movement unit comprises
- one, two or more wheels, and/or
- one, two or more crawler chains (136, 216),
- wherein, preferably, the one, two or more wheels and/or the one, two or more crawler chains (136, 216) is or are designed to be flexible,
and/or
wherein the emissions-free drive comprises
- an electric drive, and/or
- a fuel cell.

11. Method for moving an animal-pen vehicle (100, 200, 300) on a floor surface (504) with bedding of a poultry pen (400, 500) for the purposes of influencing positions at which poultry animals are residing, comprising
- providing an animal-pen vehicle (100, 200, 300), in particular an animal-pen vehicle (100, 200, 300) as claimed in at least one of claims 1-10, within a poultry pen with at least one poultry residence facility;
- moving the animal-pen vehicle (100, 200, 300) with a predetermined travel profile, wherein the travel profile comprises at least one movement pattern (412) and at least one preferential area (420, 421, 422, 423, 424, 425) to be travelled to within the poultry pen,
- wherein the travel profile comprises two or more preferential areas (420, 421, 422, 423, 424, 425) and
- the preferential areas (420, 421, 422, 423, 424, 425) comprise preferred locations of the poultry animals, and
- **characterized in that** the control device (150) is designed to provide a first travel profile and a second travel profile, wherein a first movement pattern (412) of the first travel profile differs from a second movement pattern (412) of the second travel profile, and the control device (150) is arranged and designed to provide the first travel profile and the second travel profile in a time-dependent manner.

12. Method as claimed in the preceding claim 11, comprising
- activating an animation of the animating device when the animal-pen vehicle (100, 200, 300) is positioned within a preferential area (420, 421, 422, 423, 424, 425) and/or in the region of a predefined animation area, and/or
- detecting a poultry animal and directing the animation at the poultry animal in targeted fashion,
and/or
wherein the predetermined travel profile has a travel profile distance to be travelled and/or a travel profile duration, and
- the animal-pen vehicle (100, 200, 300) moves within the preferential areas (420, 421, 422, 423, 424, 425) that are to be travelled to over more than 20%, and/or 30%, and/or 40%, and/or 50%, and/or 60%, and/or 70%, and/or 80% of the travel profile distance, and/or
- the animal-pen vehicle (100, 200, 300) moves within the preferential areas (420, 421, 422, 423, 424, 425) that are to be travelled to over more than 20%, and/or 30%, and/or 40%, and/or 50%, and/or 60%, and/or 70%, and/or 80% of the travel profile duration.

13. Use of an animal-pen vehicle (100, 200, 300) as claimed in at least one of claims 1-10s, in a poultry pen for poultry animals for the purposes of influencing positions at which poultry animals are residing.

## Revendications

1. Véhicule de stabulation (100, 200, 300) destiné à se déplacer sur une surface de sol (504), présentant de la litière (510), d'un poulailler (400, 500) pour influencer des positions de séjour de volailles, comprenant
- un entraînement sensiblement sans émissions,
- au moins une unité de déplacement couplée à l'entraînement, dans lequel l'unité de déplacement est disposée et réalisée pour permettre un déplacement du véhicule de stabulation (100, 200, 300) sur la litière,
- un dispositif de définition de position pour définir une position du véhicule de stabulation (100, 200, 300) par rapport à des installations de stabulation (506, 508),
- un dispositif de commande (150) pour fournir un profil de déplacement prédéfini et pour commander l'entraînement selon le profil de déplacement fourni, dans lequel le profil de déplacement comprend au moins un modèle de déplacement (412) et au moins une zone de prédilection (420, 421, 422, 423, 424, 425) à approcher à l'intérieur du poulailler,
- dans lequel le profil de déplacement comprend deux zones de prédilection (420, 421, 422, 423, 424, 425) ou plus, et
- les zones de prédilection (420, 421, 422, 423, 424, 425) comprennent des places préférées des volailles, et
- **caractérisé en ce que** le dispositif de commande (150) est réalisé pour fournir un premier profil de déplacement et un deuxième profil de déplacement, dans lequel un premier modèle de déplacement (412) du premier profil de déplacement se distingue d'un deuxième modèle de déplacement (412) du deuxième profil de déplacement, et le dispositif de commande (150) est disposé et réalisé pour fournir le premier profil de déplacement et le deuxième profil de déplacement en fonction du temps.

2. Véhicule de stabulation (100, 200, 300) selon la revendication précédente, dans lequel une hauteur de véhicule de stabulation est inférieure à 450 mm.

3. Véhicule de stabulation (100, 200, 300) selon au moins l'une quelconque des revendications précédentes, dans lequel le profil de déplacement prédéfini présente une distance de profil de déplacement à parcourir et/ou une durée de profil de déplacement et le dispositif de commande (150) est disposé et réalisé pour commander un déplacement du véhicule de stabulation (100, 200, 300) de telle manière que
- le véhicule de stabulation (100, 200, 300) se déplace à plus de 20 %, et/ou 30 %, et/ou 40 %, et/ou 50 %, et/ou 60 %, et/ou 70 %, et/ou 80 % de la distance de profil de déplacement à l'intérieur des zones de prédilection (420, 421, 422, 423, 424, 425) à approcher, et/ou
- le véhicule de stabulation (100, 200, 300) se déplace à plus de 20 %, et/ou 30 %, et/ou 40 %, et/ou 50 %, et/ou 60 %, et/ou 70 %, et/ou 80 % de la durée de profil de déplacement à l'intérieur des zones de prédilection (420, 421, 422, 423, 424, 425) à approcher.

4. Véhicule de stabulation (100, 200, 300) selon au moins l'une quelconque des revendications précédentes, comprenant
- un dispositif d'animation avec au moins une animation,
- dans lequel le dispositif de commande (150) est disposé et réalisé de préférence pour activer l'animation lors du positionnement du véhicule de stabulation (100, 200, 300) à l'intérieur d'une zone de prédilection (420, 421, 422, 423, 424, 425) et/ou dans la zone d'une zone d'animation prédéfinie et/ou pour activer et/ou pour désactiver et/ou pour modifier l'animation en fonction du temps.

5. Véhicule de stabulation (100, 200, 300) selon au moins l'une quelconque des revendications précédentes, dans lequel
le dispositif d'animation est disposé et est réalisé pour émettre
- au moins un signal optique, et/ou
- au moins un signal acoustique, et/ou
- un fluide
- en tant qu'animation.

6. Véhicule de stabulation (100, 200, 300) selon au moins l'une quelconque des revendications précédentes,
- dans lequel un modèle de référence d'un poulailler (400, 500) est enregistré dans le dispositif de commande (150) et le profil de déplacement ou les profils de déplacement est déterminé ou sont déterminés sur la base du modèle de référence,
- dans lequel de préférence le modèle de référence du poulailler (400, 500) comprend
o des délimitations de poulailler (402, 404, 406), et/ou
∘ des installations, et/ou
o des passages entre deux ou plusieurs sections de poulailler, en particulier des zones de séjour.

7. Véhicule de stabulation (100, 200, 300) selon au moins l'une quelconque des revendications précédentes, comprenant :
- un boîtier (110, 301, 302, 303), qui renferme le côté supérieur opposé à la litière du véhicule de stabulation (100, 200, 300) et/ou au moins par endroits des surfaces latérales du véhicule de stabulation (100, 200, 300), dans lequel
- le boîtier (110, 301, 302, 303) est monté de manière flottante, et/ou
- le boîtier (110, 301, 302, 303) comprend au moins un capteur de butée (611, 612), qui est disposé et réalisé pour identifier un contact du boîtier (110, 301, 302, 303) avec un obstacle, en particulier un objet et/ou un animal, dans lequel le capteur de butée est compris de préférence par un support du boîtier (110, 301, 302, 303).

8. Véhicule de stabulation (100, 200, 300) selon au moins l'une quelconque des revendications précédentes, dans lequel
- l'au moins un capteur de butée (611, 612) selon la revendication précédente est disposé et réalisé pour identifier une direction de butée, et/ou
- l'au moins un capteur de butée (611, 612) selon la revendication précédente présente une sensibilité variable, laquelle varie de préférence en fonction d'une position, définie par le dispositif de définition de position, du véhicule de stabulation (100, 200, 300), et/ou
- l'au moins un capteur de butée (611, 612) selon la revendication précédente est disposé et réalisé pour être activé et/ou désactivé et/ou modifié dans des positions prédéfinies du véhicule de stabulation (100, 200, 300), et/ou
- le dispositif de commande (150) est disposé et réalisé pour approcher une position d'obstacle à deux reprises ou à plusieurs reprises pour détecter un obstacle pouvant être déplacé ou stationnaire, et/ou
- le dispositif de commande (150) est disposé et réalisé pour contourner un obstacle stationnaire détecté pour un laps de temps prédéfini, et/ou
- le dispositif de commande (150) est disposé et réalisé pour approcher à nouveau un obstacle stationnaire détecté après un laps de temps prédéfini, et/ou
- le dispositif de définition de position comprend une unité de lecture de codes à barres et/ou une unité de lecture de QR codes et/ou une unité de lecture de codes matriciels de données, et/ou
- le dispositif de définition de position est disposé et réalisé pour définir une position du véhicule de stabulation (100, 200, 300) à l'intérieur d'un poulailler en cas de contrainte liée à des poussières et/ou à de l'encrassement, dans lequel le dispositif de définition de position présente de préférence une unité à bande ultra large et/ou une unité RFID et/ou une unité fonctionnelle et/ou un odomètre et/ou un mécanisme de détection d'inertie, et/ou
- le montage flottant selon la revendication précédente est réalisé pour un retour autonome dans une position de départ, de préférence par au moins un élément de ressort, dans lequel l'élément de ressort est disposé de préférence sur le boîtier (110, 301, 302, 303) ou le corps de base (120) et/ou est réalisé en forme de disque et/ou présente des évidements.

9. Véhicule de stabulation (100, 200, 300) selon au moins l'une quelconque des revendications précédentes, comprenant
- un dispositif de couplage pour fixer de manière amovible une unité fonctionnelle,
- dans lequel l'unité fonctionnelle est choisie de préférence parmi le groupe comprenant
∘ une fraise de litière (220), et/ou
∘ un poussoir de litière, et/ou
∘ un dispositif de distribution pour du matériau de manipulation, et/ou
∘ un dispositif de distribution de papier pour poussins (270).

10. Véhicule de stabulation (100, 200, 300) selon au moins l'une quelconque des revendications précédentes, dans lequel
l'unité de déplacement comprend
- une, deux ou plusieurs roues, et/ou
- une, deux ou plusieurs chenilles (136, 216),
- dans lequel de préférence une, deux ou les plusieurs roues et/ou une, deux ou les plusieurs chenilles (136, 216) est ou sont réalisées de manière à pouvoir être foulées,
et/ou
dans lequel l'entraînement sans émissions comprend
- un entraînement électrique et/ou
- une pile à combustible.

11. Procédé pour déplacer un véhicule de stabulation (100, 200, 300) sur une surface de sol (504), présentant de la litière (510), d'un poulailler (400, 500) pour influencer des positions de séjour de volailles, comprenant
- la fourniture d'un véhicule de stabulation (100, 200, 300), en particulier d'un véhicule de stabulation (100, 200, 300) selon au moins l'une quelconque des revendications 1 - 10, à l'intérieur du poulailler avec au moins un dispositif de séjour de volailles ;
- le déplacement du véhicule de stabulation (100, 200, 300) avec un profil de déplacement prédéfini, dans lequel le profil de déplacement comprend au moins un modèle de déplacement (412) et au moins une zone de prédilection (420, 421, 422, 423, 424, 425) à approcher à l'intérieur du poulailler,
- dans lequel le profil de déplacement comprend deux zones de prédilection (420, 421, 422, 423, 424, 425) ou plus, et
- les zones de prédilection (420, 421, 422, 423, 424, 425) comprennent des places préférées des volailles, et
- **caractérisé en ce que** le dispositif de commande (150) est réalisé pour fournir un premier profil de déplacement et un deuxième profil de déplacement, dans lequel un premier modèle de déplacement (412) du premier profil de déplacement se distingue d'un deuxième modèle de déplacement (412) du deuxième profil de déplacement, et le dispositif de commande (150) est disposé et réalisé pour fournir le premier profil de déplacement et le deuxième profil de déplacement en fonction du temps.

12. Procédé selon la revendication précédente 11,
comprenant
- l'activation d'une animation du dispositif d'animation lors du positionnement du véhicule de stabulation (100, 200, 300) à l'intérieur d'une zone de prédilection (420, 421, 422, 423, 424, 425) et/ou dans la zone d'une zone d'animation prédéfinie, et/ou
- l'identification d'une volaille et l'adaptation ciblée de l'animation à la volaille, et/ou
dans lequel le profil de déplacement prédéfini présente une distance de profil de déplacement à parcourir et/ou une durée de profil de déplacement, et
- le véhicule de stabulation (100, 200, 300) se déplace à plus de 20 %, et/ou 30 %, et/ou 40 %, et/ou 50 %, et/ou 60 %, et/ou 70 %, et/ou 80 % de la distance de profil de déplacement à l'intérieur des zones de prédilection (420, 421, 422, 423, 424, 425) à approcher, et/ou
- le véhicule de stabulation (100, 200, 300) se déplace à plus de 20 %, et/ou 30 %, et/ou 40 %, et/ou 50 %, et/ou 60 %, et/ou 70 %, et/ou 80 % de la durée de profil de déplacement à l'intérieur des zones de prédilection (420, 421, 422, 423, 424, 425) à approcher.

13. Utilisation d'un véhicule de stabulation (100, 200, 300) selon au moins l'une quelconque des revendications 1 ― 10 dans un poulailler pour des volailles pour influencer des positions de séjour de volailles.
